(19) Europäisches Patentamt
European Patent Office
Office européen des brevets

(11) EP 0 905 191 B1

(12) # EUROPEAN PATENT SPECIFICATION

(45) Date of publication and mention of the grant of the patent:
**03.10.2012 Bulletin 2012/40**

(21) Application number: **97924287.2**

(22) Date of filing: **29.05.1997**

(51) Int Cl.:
***C08L 67/02*** *(2006.01)* ***C08G 63/127*** *(2006.01)*
***C08G 63/88*** *(2006.01)* ***C09D 167/02*** *(2006.01)*
***B32B 27/36*** *(2006.01)* ***B32B 15/08*** *(2006.01)*

(86) International application number:
**PCT/JP1997/001863**

(87) International publication number:
**WO 1997/045483 (04.12.1997 Gazette 1997/52)**

(54) **POLYESTER RESIN COMPOSITION AND FILM MADE THEREFROM, POLYESTER COMPOSITE FILM AND METAL LAMINATE MADE BY USING THE SAME**

POLYESTERHARZZUSAMMENSETZUNG, DARAUS HERGESTELLTE FOLIE, POLYESTER-VERBUNDFOLIE UND DARAUS HERGESTELLTE METALLLAMINATE

COMPOSITION DE RESINE POLYESTER, FILM OBTENU A PARTIR DE CETTE COMPOSITION, FILM COMPOSITE POLYESTER ET LAMINE METALLIQUE OBTENU A PARTIR DE CE FILM

(84) Designated Contracting States:
**BE DE FR GB IT SE**

(30) Priority: **31.05.1996 JP 16101696**
**23.08.1996 JP 24120596**
**15.10.1996 JP 29435596**
**08.01.1997 JP 1340897**
**10.01.1997 JP 273097**

(43) Date of publication of application:
**31.03.1999 Bulletin 1999/13**

(73) Proprietor: **DAIWA CAN COMPANY**
**Tokyo**
**103-8240 (JP)**

(72) Inventors:
- **MURAFUJI, Yoshinori**
  **Hofu-shi,**
  **Yamaguchi 747-0065 (JP)**
- **KAWABE, Masayuki**
  **Hofu-shi,**
  **Yamaguchi 747-0825 (JP)**
- **ITO, Yoshimi**
  **Hofu-shi,**
  **Yamaguchi 747-0823 (JP)**
- **YAMAMOTO, Masaki**
  **Hofu-shi,**
  **Yamaguchi 747-0823 (JP)**
- **KUBOTA, Michio**
  **Hofu-shi,**
  **Yamaguchi 747-0823 (JP)**
- **HAYASHI, Yoshihiro**
  **Saba-gun,**
  **Yamaguchi 747-0232 (JP)**
- **NAITO, Hiroshi**
  **Yamaguchi-shi,**
  **Yamaguchi 753-0811 (JP)**
- **INDO, Takashi**
  **Setagaya-ku,**
  **Tokyo 158-0083 (JP)**

(74) Representative: **Vossius & Partner**
**Siebertstrasse 4**
**81675 München (DE)**

(56) References cited:
**EP-A- 0 685 332** **JP-A- 1 254 744**
**JP-A- 2 245 057** **JP-A- 3 084 059**
**JP-A- 5 331 301** **JP-A- 6 218 895**
**JP-A- 7 238 176** **JP-A- 8 157 699**
**JP-A- 8 230 130** **JP-A- 8 276 553**
**JP-A- 55 060 552** **JP-A- 61 179 255**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This invention relates to a polyester resin composition which is excellent in heat resistance, ductility, adhesion, impact resistance, flavor properties, and extrudability and is designed chiefly for coating the inner and outer surfaces of metal cans. The invention also relates to a film comprising the same.

A coat on the inner and outer surfaces of a metal can, which is for preventing the metal from corrosion or dissolving into the contents, has conventionally been provided by applying a thermosetting resin coat containing an epoxy resin, a phenolic resin, etc. However, the method of applying such a thermosetting resin requires a long time for drying and needs a step of washing with a large quantity of water, which reduces the productivity, and also involves environmental pollution by an organic solvent used in quantity.

In order to solve these problems, it has been proposed to dry laminate a separately prepared polyester film on a metal plate, such as a steel plate or an aluminum plate, or a surface-treated (e.g., plated) metal plate, and forming the laminate into cans. For example, a copolyester film having a specific density and a specific coefficient of planar orientation (see JP-A-64-22530, the term "JP-A" as used herein means an "unexamined published Japanese patent application") and a copolyester film having specific crystallinity (see JP-A-2-57339) have been proposed as a film to be dry laminated on a metal plate.

Although metal cans obtained by these methods have satisfactory flavor properties (flavor or taste keeping properties), the polyester film is unsatisfactory in impact resistance, adhesion to a metal plate, and ductility at the time of can formation.

Besides, the copolyester film used is expensive, and dry laminating of the film on a metal plate raises the cost of production.

JP-A-7-195617 and JP-A-8-66988 disclose a resin composition to be carried out by melt extrusion on a metal plate to provide a resin-coated layer, which comprises a saturated copolyester and an ionomer resin or a polystyrene or polyester thermoplastic elastomer. Extrusion lamination, a technique of laminating a melt-extruded resin directly on a metal plate, is advantageous in that it is capable of producing a resin-coated metal at a very high rate and that a step of rolling up a separately prepared film is not necessary, thereby to simplify the step. However, the resin composition containing an olefinic ionomer resin or a polystyrene thermoplastic elastomer, etc. has poor flavor properties. In addition, these resin compositions have a higher melt viscosity than saturated polyesters have, and are not suitable for obtaining a thin film having a thickness of about 20 $\mu$m or less either in film formation or extrusion lamination. To overcome the above drawbacks, JP-A-51-17988 teaches a method for obtaining a metal laminate by extrusion laminating a saturated polyester resin directly, in which a polyethylene terephthalate polymer (the term "polyethylene terephthalate polymer" as used herein is the general term for a polymer containing an ethylene terephthalate as a main polymer component) having a degree of crystallinity of not more than 20% is used, and JP-A-51-148755 proposes a method for obtaining a metal laminate in which a polyethylene terephthalate polymer is extrusion laminated on a metal substrate heated to 200 to 350°C. Further, JP-A-8-1863 and JP-A-8-230130 disclose a metal laminate obtained by extrusion laminating a resin composition wherein a polyethylene terephthalate polymer and a polybutylene terephthalate polymer (the term "polybutylene terephthalate polymer" as used herein is the general term for a polymer containing a butylene terephthalate as a main polymer component) are compounded, and JP-A-4-325545 and JP-A-6-80865 disclose a resin composition wherein a polyethylene terephthalate polymer and a polybutylene terephthalate polymer are compounded, which is used as a sealing material for paper or plastic containers.

It has been suggested that the flavor properties of a metal can coating resin comprising a blend of a polyethylene terephthalate resin (the term "polyethylene terephthalate resin" as used herein is the general term for a resin containing an ethylene terephthalate as a main polymer component) and a polybutylene terephthalate resin (the term "polybutylene terephthalate resin" as used herein is the general term for a resin containing a butylene terephthalate as a main polymer component) can be improved by reducing free monomers and oligomers that are regarded as a cause of deteriorating flavor properties. For example, JP-A-7-145252 discloses a method for reducing an oligomer (cyclic trimer) content in polyester by increasing the degree of polymerization of the polyester, and JP-A-7-330924 proposes a method in which a metal compound having transesterification catalyzing ability in polymerizing polyethylene terephthalate is deactivated by a phosphoric or phosphorus compound thereby to suppress production of monomers due to thermal decomposition.

Since the polyester film used in any of the above-mentioned methods has a single-layer structure, if it is thermally adhered onto a metal plate at a temperature not less than the melting point of the resin, it will develop cracks upon receiving shocks during can formation. When the polyester is thermally adhered at a temperature not more than the melting point, crack development on receipt of shocks during can formation can be inhibited, but the film will be separated due to insufficient adhesion to metal. In order to solve this problem, a method in which a composite film composed of a base layer of a high-melting polyester and an adhesive layer of a low-melting polyester is laminated on a metal plate is disclosed in JP-A-2-81630, JP-A-7-1693, and JP-A-7-47650.

A resin film where a polyethylene terephthalate resin and a polybutylene terephthalate resin are blended has been proposed as an adhesive layer having improved adhesion to metal and improved impact resistance during can

formation (see JP-A-6-234188 and JP-A-7-101013).

Addition of an antioxidant to polyester is often adopted to improve heat resistance or impact resistance of polyester. Addition of an antioxidant is also known to be effective in improving the heat resistance or impact resistance of a polyester film to be laminated on a metal plate. For example, JP-A-7-138387 discloses a polyester film to be laminated on metal plate, which is formed of a polyester composition containing 0.01 to 5.0% by weight of an antioxidant, and JP-A-7-207039 describes a polyester film to be laminated on metal, which has a melting point of 120 to 260°C and contains 0.01 to 1.0% by weight of a diethylene glycol component and 0.001 to 1.0% by weight of an antioxidant.

However, these proposals have failed to provide a resin composition for metal can coating that satisfies all the requirements including high-speed laminating extrudability, draw processability required in can formation, impact resistance after receiving thermal history, safety and flavor properties suitable for use in contact with various drinks, such as coffee, tea, juice, and beer. That is, the resin disclosed in JP-A-51-17988 has insufficient adhesion to a metal plate; and the one disclosed in JP-A-51-148755 tends to develop cracks during can formation due to insufficient impact resistance, involving a fear of metal's dissolving into the contents.

Impact resistance in practical use will be explained here. Resistance to dents serves as a measure for evaluating impact resistance required of canned products in actual use. The term "resistance to dents" means retention of adhesion of a coat to a metal plate at the time when an impact makes a dent on the can, for example, when the can is dropped, or the cans strike each other. When the coat is separated or pinholes are generated on the coat by impact, metal dissolves from the portion to ruin the preservability of the contents. This is why satisfactory resistance to dents is demanded.

Can manufacture and packing steps are generally carried out by forming a metal plate coated with polyester or a polyester resin composition into cans, drying the cans, printing necessary information on the outer surface of the cans, packing contents in the cans, and sterilizing the contents by heating. The heat treatments conducted according to the above steps tend to give adverse influences on the polyester or polyester resin composition, particularly a polybutylene terephthalate resin, tending to cause thermal deterioration, i.e., reduction in molecular weight. As a result, the adhesion of the polyester or the polyester resin composition to metal is reduced, and cracks develop.

The resin composition disclosed in JP-A-8-1863 is a mere blend of polyethylene terephthalate with polybutylene terephthalate having a high melting point and a high glass transition point. The one disclosed in JP-A-8-230130 exhibits insufficient extrudability in high-speed extrusion lamination. Those disclosed in JP-A-4-325545 and JP-A-6-80865 are inferior in impact resistance after a high-temperature thermal history. Like this, merely blending a polyethylene terephthalate polymer and a polybutylene terephthalate polymer could not attain sufficient molding properties in extrusion lamination, adhesion, flavor properties, and the like performance. In other words, since a polyester resin per se is not suited to extrusion lamination in view of its melt characteristics, it is necessary to select the copolymerization components, polymerization conditions, and the other factors so as to improve all the aforesaid performance properties required of a metal can coat. The oligomer (trimer) which is to be reduced in JP-A-7-145252 has slight influences on flavor properties. Monomers in a polybutylene terephthalate resin, e.g., terephthalic acid, are more influential on flavor properties. Therefore, the disclosed technique alone cannot bring sufficient improvement on flavor properties. The method of JP-A-7-330924 succeeds in reducing monomers in polyethylene terephthalate, e.g., terephthalic acid, but cannot reduce monomers in polybutylene terephthalate, e.g., terephthalic acid, thus failing to bring about remarkable improvement on flavor properties. In addition, any of these resin compositions are unsatisfactory in terms of high-speed laminating extrudability, molding processability, and impact resistance. According to JP-A-2-81630, JP-A-7-1693, and JP-A-7-47650, in which a composite film composed of a high-melting polyester as a base layer and a low-melting polyester as an adhesive layer is laminated on a metal plate, the low-melting polyester to be used as an adhesive layer has insufficient heat resistance and impact resistance. Further, the film often undergoes deterioration of appearance (i.e., development of white spots) during can formation, and subsequent heat treatments or often suffers from cracking or partial delamination by impact, failing to provide metal cans suitable for drinks.

The adhesive layer according to JP-A-6-234188 and JP-A-7-101013, which comprises a polyethylene terephthalate resin and a polybutylene terephthalate resin, has insufficient adhesion to a metal plate or insufficient impact resistance during can formation. When the resin is laminated on a metal plate by high-speed extrusion lamination which we aimed at, the edges of the extruded film become seriously wavy, making normal extrusion infeasible. Therefore, the disclosed resin composition is unsuitable for high-speed lamination.

Of the above two techniques using an antioxidant, the polyester resin composition of JP-A-7-138387 has somewhat improved but still insufficient adhesion and extremely poor extrudability in high-speed extrusion lamination. The one disclosed in JP-A-7-207039 is, when extrusion laminated, inferior in all of adhesion to metal, impact resistance, and high-speed laminating extrudability.

Where a polymer-coated metal plate to be used in manufacturing metal cans for drinks is produced by extrusion laminating a resin on a metal plate, the resin is also required to have an appropriate melt viscosity and a high melt strength. Having low melt strength, a polyester resin results in vigorous edge waviness in extrusion laminating at a high speed as stated above, and it cannot be extruded normally. The same may probably apply when a polyester resin is extrusion laminated on paper or film for food wrapping. A method in which solid phase polymerization is adopted to

obtain a polyester having an increased intrinsic viscosity (hereinafter abbreviated as IV) and a method in which a crosslinked structure is introduced into the molecular chain of a polyester are known as an approach for improving the melt viscosity of polyester. The former achieves improvement in melt viscosity but results in an increased melt strength, which considerably reduces extrudability. The latter can be embodied by adding a small amount of a polyfunctional compound to the melt polymerization system at the time of melt polymerization of polyester. Formation of a crosslinked structure aims at improvement in melt strength while suppressing increase in melt viscosity and thereby preventing reduction in molding processability, but the improvement is still insufficient.

Further, if a polyfunctional compound is added at the time of polymerization, both polycondensation and crosslinking reactions take place simultaneously, making the polymerization time extremely shorter. As a result, the monomers and oligomers, such as bishydroxyethyl terephthalate (hereinafter abbreviated as BHET) or a dimer of BHET (hereinafter abbreviated as BHET2), which are intermediate products of the polymerization, tend to remain in the resulting resin as unreacted matter.

For example, JP-A-6-80865 proposes a resin composition comprising two kinds of polyester resins and having incorporated therein a compound having at least three ester bond-forming functional groups. Since the thus-obtained resin composition contains considerable amounts of monomers and oligomers, e.g., BHET and BHET2, the monomers or oligomers are precipitated in quantity to deteriorate flavor properties when the resin composition is laminated on a substrate (base material) and subjected to retort treatment. If such a laminate is used for packing juice, liquor, etc., the packed drink tends to have its aroma or taste spoiled.

Therefore, the laminate is unsuitable for packing some kinds of foods or drinks.

While polyester generally has satisfactory flavor properties as compared with polyolefin resins, it contains monomers and oligomers which seem to influence the flavor properties. In particular, free terephthalic acid having a small threshold value (the minimum amount perceptible in an organoleptic test) is considered to be greatly influential. A polybutylene terephthalate resin generally has a higher free terephthalic acid content than a polyethylene terephthalate resin. If the free terephthalic acid is contained in a polybutylene terephthalate resin in a large amount, such a large amount of terephthalic acid dissolves out during retort treatment, causing deterioration of flavor or taste of the contents, such as juice or liquor.

As described above, none of the conventional techniques succeeded in providing a polyester resin composition which exhibits satisfactory adhesion to metal, develops no cracks by impact when made into cans, has sufficient extrudability in high-speed laminating extrusion, exhibits satisfactory impact resistance even after a thermal history above a certain temperature, exhibits excellent flavor properties, has a markedly reduced content of monomers and oligomers, such as BHET, BHET2 and terephthalic acid, and is therefore suitable for coating the outer and/or inner surfaces of cans.

JP-A-3293110 relates to the manufacture of a thermoplastic polyester resin foam having a die swell ratio of 3 or more by adding a foaming agent and a crosslinking agent to a thermoplastic polyester resin, using the resin extruded under specific conditions, extruding string-like foams through a specific cap at a predetermined temperature, and allowing them to swell and adhere to one another.

EP-A-0 685 332 discloses a laminated polyester film composed of a first layer comprising a first aromatic copolyester having a terminal carboxyl concentration of 10-35 equivalents per $10^6$ g and a second layer comprising a melt blend of an aromatic polyester containing ethylene terephthalate as the main repeating unit with a third aromatic polyester containing tetramethylene terephthalate as the main repeating unit and having a terminal carboxyl concentration of 40-80 equivalents per $10^6$ g.

An object of the present invention is to solve the problems associated with the conventional techniques and to provide a polyester resin composition suitable for coating the inner and/or outer surfaces of cans, which composition exhibits satisfactory adhesion to metal, develops no cracks by impact on being made into cans even where it has a single layer structure, secures sufficient extrudability in high-speed extrusion lamination even in the form of a composite film, exhibits excellent heat resistance, ductility, extrudability, adhesion, and flavor properties, and has a markedly reduced content of monomers and oligomers, such as BHET, BHET2 and free terephthalic acid.

The present invention provides in its first embodiment a polyester resin composition comprising (1) 30 to 90% by weight of a polyester-A comprising ethylene terephthalate as a main component, wherein the polyester-A has a melting point of not lower than 220°C and contains 0.1 to 2.0 mol% of a compound having 3 or 4 ester bond-forming functional groups per a molecule thereof (hereinafter referred to as polyester-A), (2) 10 to 70% by weight of a copolyester-B comprising butylene terephthalate as a main component, wherein the copolyester-B has a melting point of 150 to 210°C and a glass transition temperature of not higher than 20°C (hereinafter referred to as copolyester-B), and (3) a hindered phenol organic compound and/or tocopherol.

The invention provides in its second embodiment provides (i) a polyester resin composition having a free terephthalic acid content of not more than 20 ppm by weight, (ii) a polyester resin composition having a BHET content of not more than 60 ppm by weight and a BHET2 content of not more than 300 ppm by weight, and (iii) a polyester resin composition having a free terephthalic acid content of not more than 20 ppm by weight, a BHET content of not more than 60 ppm by weight, and a BHET2 content of not more than 300 ppm by weight.

The invention provides in its third embodiment a polyester resin composition comprising polyester-A which contains a monocarboxylic acid or a derivative thereof and/or a monohydric alcohol.

The invention provides in its fourth embodiment (i) a polyester resin composition having a melt viscosity of not higher than 600 Pa (6000 poise) and a melt tensile strength of not lower than 0.3 g, as measured at a temperature of (the melting point of polyester-A + 25°C) and (ii) a polyester resin composition having a die swell ratio of not less than 1.3 as measured at a temperature of (the melting point of polyester-A + 40°C), the die swell ratio being represented by the following formula (hereinafter the same):

$$S_D = D_P/D_C$$

wherein $S_D$ is a die swell ratio; $D_P$ is a diameter of a polymer extruded from a capillary at a shear rate of 121.6 $sec^{-1}$; and $D_c$ is a diameter of the capillary

Disclosed herein is a polyester which comprises ethylene terephthalate as a main component, wherein the polyester has a melting point of not lower than 220°C, contains 0.1 to 2.0 mol% of a compound having 3 or 4 ester bond-forming functional groups per a molecule thereof, and has a die swell ratio of not less than 1.3 as measured at a temperature of (the melting point of the polyester + 40°C).

Disclosed herein is a polyester which comprises ethylene terephthalate as a main component, wherein the polyester has a melting point of not lower than 220°C, contains 0.1 to 2.0 mol% of a compound having 3 or 4 ester bond-forming functional groups per a molecule thereof, has a BHET content of not more than 60 ppm by weight and a BHET2 content of not more than 300 ppm by weight, and has a die swell ratio of not less than 1.3 as measured at a temperature of (the melting point of the polyester + 40°C).

Disclosed herein is a polyester containing a monocarboxylic acid or a derivative thereof and/or a monohydric alcohol, wherein the polyester has a die swell ratio of not less than 1.3 as measured at a temperature of (the melting point of the polyester + 40°C)

Disclosed herein is a polyester which comprises ethylene terephthalate as a main component, wherein the polyester has a melting point of not lower than 220°C, contains 0.1 to 2.0 mol% of a compound having 3 or 4 ester bond-forming functional groups per a molecule thereof, shows an increase in IV of not more than 0.1 dl/g upon being heated at 150 to 210°C for at least 5 hours in a vacuum or in an inert gas atmosphere, and has a die swell ratio of not less than 1.3 as measured at a temperature of (the melting point of the polyester + 40°C). Disclosed herein is a copolyester comprising butylene terephthalate as a main component, wherein the copolyester has a melting point of 150 to 210°C, a glass transition temperature of not higher than 20°C, and a free terephthalic acid content of not more than 20 ppm by weight. The copolyester of this embodiment preferably has a metal content of not more than 50 ppm which is derived from a metallic compound used as a catalyst for polymerization.

Disclosed herein is a copolyester comprising butylene terephthalate as a main component and containing a hindered phenol organic compound and/or tocopherol.

The invention provides in its eleventh embodiment a method for preparing a polyester resin composition according to any of the claims 1 to 6 which comprises the steps of: (i) reducing a BHET content and a BHET2 content in polyester-A, which comprises subjecting polyester-A to (a) a heat treatment in which polyester-A is heated at a temperature of 130 to 150°C for at least 5 hours in a vacuum or an inert gas atmosphere or (b) a heat treatment in which polyester-A is contacted with water or steam-containing gas at 70 to 150°C for 5 minutes to 50 hours and then heated below the melting point in a vacuum or an inert gas atmosphere, and (ii) mixing 30 to 90 % by weight of said polyester-A, 10 to 70 % by weight of said copolyester-B, and a hindered phenol organic compound and/or tocopherol.

The invention provides in its twelfth embodiment a method for preparing a polyester resin composition according to any of the claims 1 to 6 which comprises the steps of: (i) reducing a free terephthalic acid content of a copolyester comprising butylene terephthalate as a main component, which comprises heating the copolyester at a temperature of 130 to 190°C for at least 1 hour in a vacuum or an inert gas atmosphere, and (ii) mixing 30 to 90 % by weight of said polyester-A, 10 to 70 % by weight of said copolyester-B, and a hindered phenol organic compound and/or tocopherol. The invention provides in its thirteenth embodiment a polyester composite film composed of an adhesive layer and a base layer of a polyester comprising ethylene terephthalate as a main component, wherein the adhesive layer comprises a polyester resin composition comprising (1) 30 to 90% by weight of a polyester-A which comprises ethylene terephthalate as a main component, wherein the polyester-A has a melting point of not lower than 220°C, and contains 0.1 to 2.0 mol% of a compound having 3 or 4 ester bond-forming functional groups per molecule thereof, (2) 10 to 70% by weight of a copolyester-B comprising butylene terephthalate as a main component, wherein the copolyester-B has a melting point of 150 to 210°C and a glass transition temperature of not higher than 20°C, and (3) a hindered phenol organic compound and/or tocopherol.

The invention provides in its fourteenth embodiment a polyester composite film according to the thirteenth

embodiment, wherein the base layer has a BHET content of not more than 60 ppm by weight and a BHET2 content of not more than 300 ppm by weight.

The invention provides in its fifteenth embodiment a polyester composite film according to the thirteenth embodiment, wherein the base layer is formed of a polyester-A comprising ethylene terephthalate as a main component, wherein the polyester-A has a melting point of not lower than 220°C, and contains 0.1 to 2.0 mol% of a compound having 3 or 4 ester bond-forming functional groups per molecule thereof.

The invention provides in its sixteenth embodiment a polyester composite film according to the thirteenth embodiment, wherein the polyester of the base layer and/or polyester-A of the adhesive layer contains a monocarboxylic acid or a derivative thereof and/or a monohydric alcohol.

The invention provides in its seventeenth embodiment a polyester composite film according to the thirteenth embodiment, wherein the polyester resin composition of the adhesive layer has (i) a melt viscosity of not higher than 600 Pas (6000 poise) and a melt tensile strength of not lower than 0.3 g as measured at a temperature of (the melting point of polyester-A + 25°C) or (ii) a die swell ratio of not less than 1.3 as measured at a temperature of (the melting point of polyester-A + 40°C).

The invention provides in its eighteenth embodiment a polyester/metal laminate composed of a metal plate having laminated on at least one side thereof any of the above-described polyester composite films.

The invention provides in its nineteenth embodiment a film comprising any of the above-described polyester resin compositions or polyester resins.

The present invention will hereinafter be explained in detail.

Polyester-A which can be used in the present invention, which comprises ethylene terephthalate as a main component, is a polyester made up of a terephthalic acid component and an ethylene glycol component as main constitutional components and has a melting point of not lower than 220°C. If the melting point is lower than 220°C, the resin cannot withstand the heat applied in the manufacture of cans, e.g., for drying and printing, and develops pinholes, etc.

Polyester-A for use in the invention can be a homopolymer or, according to the purpose, can have some kinds of comonomer unit.

Compounds which may be used as a comonomer unit include dicarboxylic acids, such as adipic acid, oxalic acid, malonic acid, succinic acid, azelaic acid, sebacic acid, isophthalic acid, naphthalenedicarboxylic acid, diphenyldicarboxylic acid, 5-t-butylisophthalic acid, diphenyl ether carboxylic acid, cyclohexanedicarboxylic acid, isophthalic acid 5-sulfonate, and a dimeric acid; and diols, such as polyalkylene glycols (e.g., diethylene glycol, 1,4-butanediol, neopentyl glycol, propylene glycol, hexamethylene glycol, 1,4-cyclohexanedimethanol, and polyethylene glycol), a diethoxy compound of bisphenol A and a diethoxy compound of bisphenol S.

Of these comonomers, preferred are aromatic dicarboxylic acids such as isophthalic acid, naphthalenedicarboxylic acid, and diphenyldicarboxylic acid for their excellent heat stability and flavor properties. Of these aromatic dicarboxylic acids, isophthalic acid is particularly preferred for its inexpensiveness and ease of polymerization reaction. The copolymerization ratio of isophthalic acid, if used, is preferably not more than 15 mol% so as to keep the melting point within the above-specified range. Where the polyester resin composition is used in melt extrusion lamination as hereinafter described, the ratio of isophthalic acid is preferably at least 5 mol%.

All the polyesters for use in the present invention can be produced by conventional processes. For example, homopolymers and copolymers are obtained by a direct esterification process comprising directly reacting a dicarboxylic acid and a diol, an ester interchange process comprising reacting dicarboxylic acid dimethyl esters with a diol, and the like. The direct esterification can be carried out either by a process in which a dicarboxylic acid and a diol are reacted at a prescribed temperature under a pressure of 1.5 to 3.0 $kg/cm^2G$ and then the pressure is dropped to complete esterification in an inert gas flow, or a process in which a slurry of a dicarboxylic acid and a diol is added in small portions to a previously esterified or ester-interchanged oligomer or an ester of a dicarboxylic acid added with a diol to both ends thereof. These processes can be performed in either a batch system or a continuous system. In some cases, solid phase polymerization may be adopted in order to obtain an increased degree of polymerization.

A polymerization catalyst which can be used in the present invention includes an oxide, a hydroxide, an acetate, an alkoxide or an oxalate of antimony, germanium, titanium, tin or niobium. Antimony trioxide, germanium dioxide or titanium tetrabutoxide is usually used. A catalyst for ester interchange for use in the invention includes compounds of calcium, magnesium, manganese, cobalt, zinc, tin or titanium. An acetate thereof is generally used. A heat stabilizer to be used in the polymerization includes a methyl, ethyl or phenyl ester of phosphoric acid or phosphorous acid.

A polyfunctional compound having 3 or 4 ester bond-forming functional groups per a molecule (hereinafter simply referred to as a polyfunctional compound) is contained in polyester-A in the production process thereof in order to improve laminating extrudability. The polyfunctional compound used here is a compound capable of reacting with a carboxyl group or a hydroxyl group of a polyester molecular chain to form an ester bond, including compounds having a carboxyl group, a hydroxyl group or an alkyl ester group (e.g., a methyl ester group or an ethyl ester group). Incorporation of such a polyfunctional group results in formation of a crosslinked structure in the polyester molecular chain thereby to bring about improvements in melt characteristics, leading to improvements in extrudability in extrusion lamination and

other extrusion molding methods.

Examples of the polyfunctional compounds include polyfunctional alcohols and acids, such as pentaerythritol, trimethylolpropane, trimellitic acid or an anhydride thereof, pyromellitic acid or an anhydride thereof, and trimesic acid.

The polyfunctional compound is used in an amount of 0.1 to 2.0 mol%, preferably 0.2 to 0.5 mol%, based on polyester-A.

If the amount of the polyfunctional compound is less than 0.1 mol%, the extrudability in laminating extrusion cannot be improved sufficiently. If it exceeds 2.0 mol%, the resin sometimes undergoes gelation, or the crosslinking reaction proceeds excessively, tending to cause the resin film to break during high-speed extrusion lamination.

It is preferable for polyester-A to have a controlled content of low-molecular weight impurities such as monomers and oligomers (e.g., BHET and BHET2) so as to have a BHET content of not more than 60 ppm by weight, particularly not more than 50 ppm by weight, and a BHET2 content of not more than 300 ppm by weight, particularly not more than 200 ppm by weight. With the BHET and BHET2 contents being so controlled, such impurities would not dissolve into the packed contents to an impermissible degree that may ruin the flavor or taste of the contents. With respect to the BHET and BHET2 contents, polyester-A is the only concern because these impurities in the polyester resin composition of the present invention are ascribed predominantly to polyester-A. BHET and BHET2 in polyester-A can be reduced by a method comprising subjecting polyester-A to a water or steam treatment followed by a heat treatment. The water or steam treatment is carried out by contacting polyester-A with water or a steam-containing gas.

The contact of polyester-A with water or steam-containing gas is conducted at a temperature of 70 to 150°C, particularly 70 to 110°C.

The contact time is usually from 5 minutes to 50 hours. The water or steam treatment is effective in deactivating the catalyst present in polyester-A. As a result, polyester-A can be prevented from extremely increasing its IV and gelling during the subsequent heating treatment.

After the water or steam treatment and prior to the subsequent heat treatment, polyester-A may be preliminarily crystallized by preheating at a temperature lower than the heat treating temperature. The heat treatment comprises at least one stage.

The heating temperature is preferably 150 to 210°C, still preferably 160 to 200°C. The heat treatment is preferably carried out in a vacuum or in an inert gas atmosphere, e.g., a nitrogen gas, argon gas or carbonic acid gas atmosphere, for 5 hours or longer.

An increase Y in IV (dl/g) of polyester-A caused by the heat treatment, which is calculated from the following equation, is preferably not more than 0.1 dl/g, still preferably not more than 0.05 dl/g.

$$Y = \eta_f - \eta_i$$

wherein Y is an increase of IV; $\eta_f$ is the IV after heat treatment; and $\eta_i$ is the IV before heat treatment.

Polyester-A having its Y value controlled within the above range does not undergo gelation and is very suitable for extrusion lamination.

Another method for reducing BHET and BHET2 in polyester-A comprises subjecting polyester-A to a heat treatment at 130 to 150°C in a vacuum or inert gas stream. At temperatures below 130°C, cases are sometimes met, in which the BHET and BHET2 contents cannot be reduced to the respective preferred levels even though the treatment is continued for an extended time. At temperatures above 150°C, the polymer tends to gel, resulting in poor quality or reduced productivity. A heating time of at least 5 hours is enough to reduce the BHET and BHET2 contents to the respective preferred levels. The inert gas to be used in the heat treatment includes nitrogen gas, argon gas, and carbonic acid gas, nitrogen gas being preferred from the economical standpoint.

It is preferable for polyester-A to contain a monocarboxylic acid or a derivative thereof and/or a monohydric alcohol; for addition of these compounds serves to reduce BHET and BHET2 in polyester-A. The monocarboxylic acid or a derivative thereof to be added preferably has a boiling point of 200°C or higher under atmospheric pressure because mixing with polyester-A is performed at as high as 200°C or above. Compounds having an alkyl group, an aryl group or a like group at the other end thereof are particularly preferred. Carboxylic acids or derivatives thereof having not more than 22 carbon atoms are preferred for securing proper mechanical and thermal characteristics of polyester-A, such as crystallinity, heat resistance, and mechanical strength. Examples of such compounds are capric acid, lauric acid, myristic acid, stearic acid, benzoic acid, naphthoic acid, n-butyl benzoate, and n-propyl benzoate.

Similarly to the carboxylic acid or a derivative thereof, the monohydric alcohols to be added preferably have a boiling point of not lower than 200°C under atmospheric pressure. Those having an alkyl group or an aryl group at the other end thereof are still preferred. Those having not more than 26 carbon atoms are particularly preferred. Examples of such alcohols are nonyl alcohol, lauryl alcohol, myristyl alcohol, stearyl alcohol, benzyl alcohol, cinnamyl alcohol, and phenoxyethanol.

The monocarboxylic acid or a derivative thereof and/or the monohydric alcohol are preferably added in a total amount of 0.01 mol% or more, particularly 0.1 to 2.0 mol%.

While it has not yet been elucidated why BHET and BHET2 in polyester-A can be reduced by addition of a monocarboxylic acid or a derivative thereof and/or a monohydric alcohol, it seems that the carboxyl group and the hydroxyl group, which are the end groups of polyester-A obtained under ordinary polymerization conditions, are blocked by a monocarboxylic acid or a derivative thereof and/or a monohydric alcohol. It would follow that BHET and BHET2 are inhibited from being released from the polymer terminals through thermal decomposition, thereby leading to reduced contents of BHET and BHET2.

The polyethylene terephthalate polymer which may be used in the polyester resin composition of the invention can be used alone, i.e., without mixing with a polybutylene terephthalate polymer as hereinafter described, to make a film.

However, in order for polyester-A to exhibit satisfactory film-forming properties in high-speed running, polyester-A should have a die swell ratio of not less than 1.3 as measured at a temperature of (the melting point of polyester-A + 40°C).

Polyester-A having such a die swell ratio will hereinafter referred to as polyester-A'. If the die swell ratio is less than 1.3, the film of the resin as extruded and laminated at a high speed suffers waviness at the edges thereof or thickness variation.

Similarly to polyester-A, polyester-A' contains a polyfunctional compound. The kind and amount of the polyfunctional compound to be incorporated into polyester-A' are the same as described for polyester-A.

Polyester-A' can either be polyethylene terephthalate or an ethylene terephthalate copolymer. Usable comonomers are the same as those enumerated with respect to polyester-A. Among these comonomers preferred are aromatic dicarboxylic acids, such as isophthalic acid, naphthalenedicarboxylic acid, and diphenyldicarboxylic acid, from the viewpoint of heat stability and flavor properties. Isophthalic acid is particularly preferred for its inexpensiveness and ease of polymerization reaction. The copolymerization ratio of isophthalic acid, if used, is preferably not more than 15 mol% so as to keep the melting point of polyester-A' at or above 220°C. Where polyester-A' is used in extrusion lamination as hereinafter described, the ratio of isophthalic acid is preferably at least 5 mol%. Polyester-A', though excellent in extrudability in high-speed extrusion lamination, exhibits unsatisfactory impact resistance after applied onto a metal plate. Accordingly, it can be used alone as a coat on the surface which is not required of impact resistance, for example, the outer side of a can. When used alone, polyester-A' must have a die swell ratio of 1.3 or more for securing sufficient high-speed laminating extrudability as stated above. Where polyester-A' is applied to the portion where flavor properties are demanded, it is preferable to reduce BHET and BHET2 in polyester-A' to the above-specified respective concentrations as in polyester-A. Reduction of BHET and BHET2 can be achieved by, for example, the same methods as in polyester-A, i.e., a hot water treatment followed by a heat treatment, containing of a monocarboxylic acid, and the like. On the other hand, where polyester-A' is applied to the surface where flavor properties are not demanded, for example, the outer side of a can, polyester-A' can be used as such without reducing BHET and BHET2. An increase Y in IV (dl/g) of polyester-A' caused by a heat treatment, which is calculated from the following equation, is preferably not more than 0.1 dl/g, still preferably not more than 0.05 dl/g.

$$Y = \eta_f - \eta_i$$

wherein Y is an increase of IV; $\eta_f$ is the IV after heat treatment; and $\eta_i$ is the IV before heat treatment.

Polyester-A' having its Y value controlled within the above range does not undergo gelation and is very suitable for extrusion lamination.

Copolyester-B to be used in the present invention, which comprises butylene terephthalate as a main component, is a polyester comprising terephthalic acid and 1,4-butanediol as main constituent components and at least one comonomer unit made up of another dicarboxylic acid component and another diol component.

Copolyester-B has a melting point of 150 to 210°C. For obtaining further improved impact resistance and adhesion to metal, the melting point is preferably 170 to 200°C. Copolyester-B has a glass transition temperature (hereinafter abbreviated as Tg) of not higher than 20°C, preferably not higher than 10°C. If the Tg exceeds 20°C, the impact resistance or adhesion to metal is reduced.

If the melting point is lower than 150°C, the resin cannot withstand the heat treatment applied in the manufacture of cans, e.g., for drying and printing, and also tends to be involved in troubles in laminating extrusion, such as adhesion of resin to the cooling roll. If the melting point exceeds 210°C, on the other hand, the impact resistance or adhesion to metal is reduced.

Owing to the Tg of not higher than 20°C and the melting point of not higher than 210°C of copolyester-B, the resulting coat has softness, excellent impact resistance and ductility. A polybutylene terephthalate resin having no comonomer unit is unsuitable because of a failure of fulfillment of both the melting point and Tg requirements.

Compounds useful as a comonomer constituting copolyester-B include dicarboxylic acids, such as adipic acid, oxalic acid, malonic acid, succinic acid, azelaic acid, sebacic acid, and dimeric acid; and diols, such as hexamethylene glycol and a polyalkylene glycol. Preferred of these comonomers are aliphatic dicarboxylic acids such as adipic acid, sebacic acid, and a dimeric acid. These comonomers, used in a small proportion, serve to reduce the Tg of the resulting copolyester, providing a copolyester satisfying the Tg requirement of 20°C or lower with ease.

In particular, adipic acid is a preferred comonomer; for the polymerization reaction easily proceeds and a coating material excellent in adhesion to metal, impact resistance, and flavor properties can be obtained. Adipic acid is preferably used at a copolymerization ratio of 10 to 35 mol%, particularly 20 to 30 mol%, for satisfying the above-described melting point and Tg conditions.

Copolyester-B preferably has a heat of fusion of not less than 20 J/g and is preferably crystalline. Having a heat of fusion of not less than 20 J/g assures adequate compatibility with polyester-A and is expected to bring about improved molding processability. Copolyester-B having such a heat of fusion can be obtained by properly selecting the comonomer as described above, increasing the viscosity of chips, or subjecting the polymer to a heat treatment.

Copolyester-B preferably has an IV of 0.8 to 2.0 dl/g. Copolyester-B may contain such a polyfunctional compound as is present in polyester-A unless the extruded film does not break in high-speed extrusion lamination. Copolyester-B may be prepared by solid phase polymerization so as to obtain desired physical properties such as the above-specified heat of fusion. From the viewpoint of flavor properties, copolyester-B preferably has a free terephthalic acid content of not more than 20 ppm by weihgt, particularly not more than 10 ppm by weight, especially not more than 5 ppm by weight. Copolyester-B having a free terephthalic acid content of not more than 20 ppm has quite satisfactory flavor properties.

The free terephthalic acid content of copolyester-B can be reduced by heating copolyester-B at 130 to 190°C for at least 1 hour in a vacuum or in an inert gas atmosphere. This heat treatment may also serve for solid phase polymerization to provide copolyester-B having a preferred melt viscosity. Nitrogen is preferably used as an inert gas.

The free terephthalic acid content of copolyester-B may also be reduced by reducing the amount of a metallic compound used as a catalyst for polymerization to not more than 50 ppm by weight in terms of metal. Because the catalyst for polymerization also acts as a catalyst for depolymerization, reduction of the amount of the catalyst seems to suppress depolymerization thereby to reduce the free terephthalic acid content in copolyester-B.

In order to prevent thermal deterioration of copolyester-B or maintain the impact resistance, copolyester-B is preferably used in combination with a hindered phenol organic compound and/or tocopherol hereinafter described. While the present invention is mainly concerned with molding of a polyester resin composition, the molding temperature of the composition is decided depending on the melting point of polyester-A. Therefore, copolyester-B whose melting point is lower than that of polyester-A is susceptible to thermal deterioration. Hence, addition of the above compound to copolyester-B is preferred for prevention of thermal deterioration of copolyester-B. Addition of the compound in the stage of preparing copolyester-B leads to simplification of production process because there is no need to add the compound in the step of mixing polyester-A and copolyester-B.

In what follows, the polyester resin composition or a polyester resin composition as an adhesive layer described below (hereinafter inclusively referred to as a polyester resin composition unless otherwise noted) will be explained in detail. The polyester resin composition of the present invention comprises (1) 30 to 90% by weight, preferably 35 to 70% by weight, particularly preferably 40 to 60% by weight of polyester-A and (2) 10 to 70% by weight, preferably 30 to 65% by weight, particularly preferably 40 to 60% by weight of copolyester-B, each based on the total weight of polyester-A and copolyester-B. If the proportion of polyester-A is less than 30% by weight, the composition has reduced heat resistance and reduced flavor properties. If it exceeds 90% by weight, the impact resistance and adhesion of the composition are reduced.

The polyester resin composition for use as a film material may be either chips obtained by blending dry chips of polyester-A and dry chips of copolyester-B in a tumbling mixer, etc. and melt-kneading the dry blend in a conventional single- or twin-screw extruder (hereinafter referred to as kneaded chips) or chips obtained by blending chips of the two kinds of resins (hereinafter referred to as mixed chips). The polyester resin composition of the present invention for use as a film material can be prepared by other various methods.

The polyester resin composition of the invention should contain a hindered phenol organic compound and/or tocopherol.

While there are a variety of hindered phenol organic compounds, those having a molecular weight of 400 or more are preferred. Examples of preferred compounds are tetrakis[methylene-3(3',5'-di-t-butyl-4'-hydroxyphenyl)propionate]methane, 1,1,3-tris(2-methyl-4-hydroxy-5-t-butylphenyl)butane, 1,3,5-trimethyl-2,4,6-tris(3,5-di-t-butyl-4-hydroxybenzyl)benzene, bis[3,3'-bis(4'-hydroxy-3'-t-butylphenyl)butyric acid] glycol ester, 1,3,5-tris(3',5'-di-t-butyl-4'-hydroxybenzyl)-s-triazine-2,4,6-(1H,3H,5H)trione, triethyleneglycol-bis[3-(3-t-butyl-5-methyl-4-hydroxyphenyl)propionate], and 1,6-hexanediol-bis[3-(3,5-di-t-butyl-4-hydroxyphenyl)propionate].

The most suitable of them is tetrakis[methylene-3(3',5'-dit-butyl-4'-hydroxyphenyl)propionate]methane having the following formula, which is commercially available under the trade name of Irganox 1010 from Ciba Geigy, Ltd.

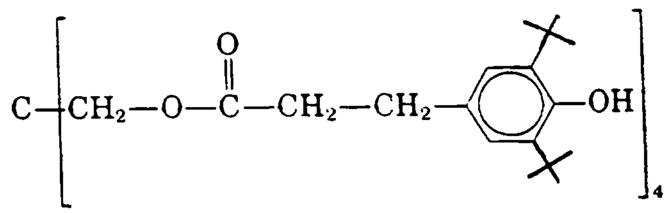

[Chem 1]

Examples of tocopherol includes α-tocopherol, β-tocopherol, γ-tocopherol, and δ-tocopherol, with α-tocopherol having the following formula being preferred.

[Chem 2]

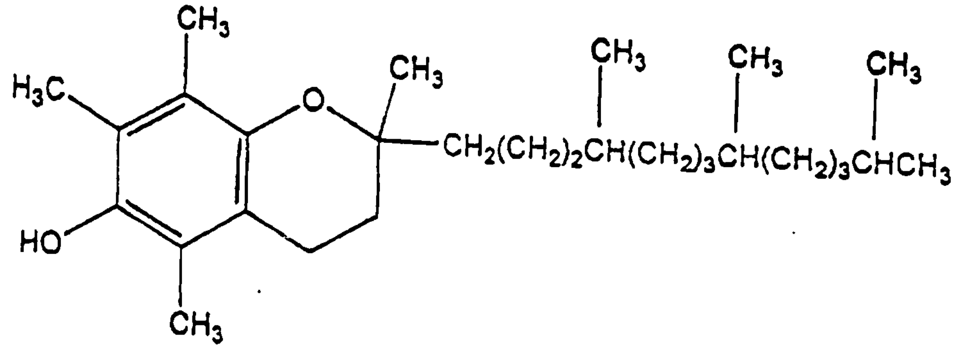

It has been proved that the above-described non-sulfur type hindered phenol organic compound having a relatively large molecular weight and/or tocopherol compounded into the polyester resin composition appreciably prevents thermal deterioration in the heat treatments in the can manufacture and appreciably reduces the electric current in a dent test of a film hereinafter described, compared with the case where it was not added. Such an effect in suppressing thermal deterioration of a film is an unexpected result. To the contrary, a sulfur type compound is unsuitable, for it gives its color or odor to the polyester resin composition.

Addition of the hindered phenol organic compound and/or tocopherol brings about a preventive effect on thermal deterioration. Addition of the compound makes it possible to prevent the polyester resin composition, especially copolyester-B of the composition, covering a metal plate from reducing its molecular weight due to thermal deterioration in the heating steps in the can manufacture, such as drying and printing steps, thereby to maintain the impact resistance after the heating. While the present invention is mainly concerned with extrusion molding of a polyester resin composition, the molding temperature of the composition is decided depending on the melting point of polyester-A. Therefore, copolyester-B whose melting point is lower than that of polyester-A is susceptible to thermal deterioration. Hence, addition of the above compound is preferred particularly for prevention of thermal deterioration of copolyester-B.

Reduction of impact resistance of a coating film due to thermal history is observed as reduction of resistance to dents after a heat treatment at a certain temperature is given to the coating film. Resistance to dents is evaluated as follows. A metal plate is coated with the polyester resin composition, etc., and the coated metal plate is formed into a can. After the can is subjected to a heat treatment at a prescribed temperature, a steel ball having a given weight is dropped on the outer side of the can, and cracking or separation of the coat is observed. Cracking or separation can be measured by an electric current test in which a sodium chloride aqueous solution is put in the can and an electric current is applied between the outer side and the inner side of the can. The degree of cracking or separation of the coat can be expressed in terms of the current through the coated metal plate. That is, the current becomes high when the coat has undergone cracking or separation to a high degree, and the current becomes low when the coat has undergone cracking or separation to a low degree. Even fine cracks or separation hardly distinguishable with the naked eye, which could be problematical for films used in food containers, such as cans, can be detected by this electric current test. Containing of the above-described compound brings an improvement in resistance to dents.

The hindered phenol organic compound and/or tocopherol is preferably added in a total amount of 0.01 to 0.5% by weight based on the polyester resin composition, at which amount thermal deterioration of the polyester resin composition can be prevented sufficiently. The compound can be added at any stage of preparation of the polyester resin composition. Specifically, it is added at the polymerization stage for preparing polyester-A and/or copolyester-B or at the stage of melt-kneading polyester-A and copolyester-B. A masterbatch containing the compound in a high concentration may be used.

Similarly to polyester-A, the polyester resin composition for use as a film having a single layer structure preferably has a BHET content of not more than 60 ppm by weight, particularly not more than 50 ppm by weight, and a BHET2 content of not more than 300 ppm by weight, particularly not more than 200 ppm by weight.

Similarly to copolyester-B, the polyester resin composition for use as a film having a single layer structure preferably has a free terephthalic acid content of not more than 20 ppm by weight, particularly not more than 10 ppm by weight, especially not more than 5 ppm by weight.

It is a matter of course that the polyester resin composition for use as a film having a single layer structure preferably has its free terephthalic acid content, BHET content, and BHET2 content all controlled within the above-described respective preferred ranges.

The polyester resin composition of the present invention is also useful in a polyester composite film composed of a base layer made of a polyester comprising ethylene terephthalate as a main component and an adhesive layer made of the polyester resin composition comprising polyester-A and copolyester-B (hereinafter simply referred to as a composite film). Such a composite film maintains adhesion to metal and impact resistance owing to the polyester resin composition as an adhesive layer. It is advantageous from the standpoint of flavor retention to use the polyester base layer having excellent flavor properties on the side to be in contact with the contents.

The polyester as a base layer can be either a mere polyester containing no polyfunctional compound or polyester-A which contains a polyfunctional compound. In the case of using polyester-A as a base layer, a crosslinked structure is introduced into the polyester molecular chain to bring about improved laminating extrudability as previously described. In using a polyester containing no polyfunctional compound, it is preferable for obtaining improved laminating extrudability that the polyester be preferably one obtained by subjecting a polyester produced by polycondensation to a heat treatment so as to have an increased IV.

Similarly to polyester-A, the polyester containing no polyfunctional compound for use as a base layer can be polyethylene terephthalate or, according to the purpose, a copolyester mainly comprising ethylene terephthalate. Usable comonomers include those enumerated with respect to polyester-A. Among the useful comonomers preferred are aromatic dicarboxylic acids, such as isophthalic acid, naphthalenedicarboxylic acid, and diphenyldicarboxylic acid, from the viewpoint of heat stability and flavor properties. Isophthalic acid is particularly preferred for its inexpensiveness and ease of polymerization reaction. The copolymerization ratio of isophthalic acid, if used, is preferably not more than 15 mol% so as to keep the melting point of the polyester at or above 220°C. Where the polyester as a base layer is extrusion laminated as hereinafter described, the ratio of isophthalic acid is preferably at least 5 mol%.

Where the base layer is to come into contact with the contents, the problem of flavor deterioration arises. In using polyester-A as a base layer, it is preferable to control the BHET and BHET2 contents within the above-described respective preferred ranges.

In using a polyester containing no functional compound as a base layer, the consideration of flavor properties is to be given as well, but such a polyester essentially has low contents of BHET and BHET2. That is, BHET and BHET2 are originally within the acceptable ranges as aimed at in the present invention. Therefore, the polyester can be used as such without particularly taking the aforesaid manipulation for reducing BHET and BHET2. In this case, it is preferable, as previously noted, to use a polyester obtained by polycondensation followed by heat treatment as the need arises so as to have an increased IV.

Although the flavor properties of the polyester resin composition as an adhesive layer are not a great concern because the adhesive layer does not come into direct contact with the contents, the composition can contain, if desired, a monocarboxylic acid or a derivative thereof and/or a monohydric alcohol for the purpose of reducing BHET and BHET2 contents of polyester-A or for other purposes.

The polyester resin composition according to the present invention preferably has a melt viscosity of not higher than (6000 poise) and a melt tension of not lower than 0. 3 g as measured at a temperature of (the melting point of polyester-A + 25°C). These physical properties provide advantages in forming a thin resin layer with a uniform thickness by film formation or extrusion lamination.

The melt characteristics referred to above are those measured on the resin composition being in the state fed to a molding machine. Where the composition is fed in the form of kneaded chips, the values measured on kneaded chips are adopted. Where the composition is fed in the form of mixed chips, the values measured on mixed chips are adopted. The melt characteristics as measured on the resin composition in the state fed to a molding machine are of importance because the polyester resin composition is extruded generally at a temperature ranging from (the melting point of polyester-A + 25°C) to (the melting point of polyester-A + 50°C) in extrusion lamination. With the melt viscosity and melt tension at the molding temperature falling within the above respective ranges, the film-forming properties or laminating extrudability onto metal can be improved while minimizing an increase in torque during extrusion.

Polyester-A for use in the base layer is particularly preferable to a polyester containing no polyfunctional compound, for the former can assure a higher melt tension at a lower melt viscosity than the latter, thereby bringing about markedly improved laminating extrudability.

The polyester resin composition preferably has a die swell ratio of not less than 1.3 as measured at a temperature of (the melting point of polyester-A + 40°C). As long as the die swell ratio is 1.3 or more, the film of the resin composition as extrusion laminated at a high speed hardly suffers wavy edges or thickness variation, and the extruded film has a reduced neck-in, that is, an increased effective width, which leads to improved productivity.

More specifically, the polyester resin composition preferably comprises polyester-A and copolyester-B having a third comonomer unit derived from adipic acid, etc.

If desired, the polyester resin composition of the invention or the polyester or polyester-A as a base layer may contain other polyesters, other polymers, and various additives. For example, they can contain known inert particles supplied externally as an organic or inorganic lubricant for improving slip properties of the film, such as kaolin, clay, calcium carbonate, silicon oxide, calcium terephthalate, aluminum oxide, titanium oxide, barium sulfate, calcium phosphate, and lithium fluoride; and an insoluble high-melting organic compound added when the polyester resin is melted and shaped into a film, a crosslinked polymer, internally supplied particles which are to be present inside the polymer, such as an alkali metal compound added as a catalyst. Further, antistatic agents, colorants, weathering agents, and the like may also be added.

The polyester resin composition preferably has two or more melting point peaks between 150°C and 250°C. This means that polyester-A and copolyester-B in kneaded chips as well as mixed chips and films prepared therefrom are in an incompatible state. It is permissible that partial ester interchange may have occurred in the kneaded chips or the films as long as such does not seriously impair the laminating extrudability or impact resistance. In this case, each melting peak shifts in agreement with the degree of ester interchange. Where polyester-A and copolyester-B are in such an incompatible state, laminating extrudability onto a metal plate and impact resistance as a metal laminate are particularly improved.

The improvements in laminating extrudability and impact resistance as a metal laminate are enhanced when the total heat of fusion of the two or more melting point peaks is 20 J/g or more.

It is preferable that the film obtained from the polyester resin composition is made up of layers in which polyester-A and copolyester-B alternate in its thickness direction, though depending on the ratio of polyester-A layers and copolyester-B layers. Such a structure suggests that polyester-A and copolyester-B are not completely compatible with each other. It is considered that the polyester resin composition having such a layer structure exhibits particularly excellent laminating extrudability, impact resistance, and flavor properties.

The polyester resin composition, in the form of kneaded chips, preferably has an IV of 0.75 to 2.0 dl/g, particularly 0.9 to 1.5 dl/g, in which case excellent impact resistance and satisfactory melt extrusion moldability can be obtained.

In order for the polyester resin composition to have an IV within the above preferred range, it is preferable that the IV of polyester-A ranges from 0.5 to 1.0 dl/g, particularly 0.6 to 0.85 dl/g, and that of copolyester-B ranges from 0.8 to 3.0 dl/g, particularly 1.0 to 2.2 dl/g, especially 1.2 to 1.6 dl/g.

Polyester-A and copolyester-B used in the invention can be obtained by, for example, a process comprising subjecting terephthalic acid, ethylene glycol (or 1,4-butanediol), and a comonomer component to esterification and polycondensing the resulting reaction product, or a process comprising subjecting dimethyl terephthalate, ethylene glycol (or 1,4-butanediol), and a comonomer component to ester interchange, and polycondensing the resulting reaction product and the like.

The polyester resin composition can be molded by a process in which kneaded chips are fed to an extrusion laminator, a process in which mixed chips are fed to an extrusion laminator, a process comprising mixing molten resins in a static mixer, etc. and feeding the molten mixture to an extrusion laminator, and the like.

The film having a single layer structure comprising the polyester resin composition or polyester-A' preferably has a thickness of 5 to 200 μm, particularly 10 to 60 μm, especially 20 to 50 μm.

The thickness of the adhesive layer of the composite film varies depending on the surface roughness of the metal plate. Where the metal plate has a smooth surface, an adhesive layer thickness of 5 μm or larger suffices for obtaining stable adhesive strength. Taking retort resistance and anticorrosion into consideration, a thickness of 10 μm or greater is preferred. Accordingly, a ratio of the base layer thickness (TA) to the adhesive layer thickness (TB), TA/TB, is preferably about 0.2 to 2.0, particularly 0.25 to 1.5. More specifically, the adhesive layer of a composite film having a total thickness, e.g., of 25 μm is preferably in a range of from 10 to 20 μm.

Polyester-A' can be applied onto a metal plate by, for example, extrusion laminating molten polyester-A' directly on a metal plate or by laminating an unstretched or biaxially stretched film of polyester-A' on a preheated metal plate. The polyester resin composition of the invention can be applied on a metal plate by, for example, extrusion laminating a molten mixture comprising polyester-A and copolyester-B at a prescribed mixing ratio directly on a metal plate or by laminating an unstretched or biaxially stretched film of the polyester resin composition on a preheated metal plate. In particular, extrusion lamination directly on a metal plate is preferred for process simplification. The resin coat may be

provided either on one side or both sides of a metal plate depending on the purpose or end use.

The composite film according to the invention has a laminate structure composed of a base layer of a polyester and an adhesive layer of the polyester resin composition. The composite film is sufficiently useful as unstretched but is preferably stretched at least uniaxially to ensure excellent heat resistance, impact resistance and flavor properties. The composite film having the above-described laminate structure is prepared by, for example, a process comprising separately melting the resin for a base layer and that for an adhesive layer, co-extruding the molten resins, bonding the layers before solidification, stretching, and heat setting, or a process comprising separately melt-extruding the resin for a base layer and that for an adhesive layer, stretching the respective layers if desired, and fusion bonding the layers. For example, polyester-A' or a polyester containing no polyfunctional compound for a base layer and the polyester resin composition for an adhesive layer are extruded in separate extruders, and laminated together inside or outside a die, followed by quenching to obtain an unstretched laminate film, which is then successively stretched biaxially and subjected to heat setting at 150 to 220°C, preferably 160 to 200°C. The polyester or polyester resin composition of the invention can also be applied to blown-film extrusion.

The metal plate to be coated is a conventional plate commonly employed in metal cans, such as a tin-plated steel plate (tinplate), tin-free steel plate (electrolytic chromic acid-treated steel plate), and an aluminum or aluminum alloy plate. For improvement in adhesion, the metal plate may be treated with an organic substance having a polar group or a chelate structure or with a chromic acid salt. If desired, the present invention is applicable to coating of paper, films or sheets.

The resin-coated metal plate composed of the metal plate and the polyester resin composition or polyester-A' can be used for production of cans including three-piece cans consisting of a cylinder formed by adhesion or welding, a top and a bottom and two-piece cans formed by deep draw forming or draw and ironing forming. Excellent in ductility and adhesion between the coat and metal, the polyester-coated metal plate using the polyester resin composition is advantageous for production of two-piece cans.

Taking operational ease of laminating on a metal plate into consideration, it is desirable for the polyester resin composition of the composite film or polyester-A' to have the above-mentioned preferred melt characteristics, such as melt viscosity, melt tension, and die swell ratio.

The metal cans thus obtained have excellent heat resistance, impact resistance and flavor properties and are therefore advantageously used for packing various drinks, e.g., coffee, tea, juice, beer, etc. Further, the polyester resin composition or polyester-A according to the invention can be extrusion laminated on paper or a film as well for use as a soft film.

<u>Examples</u>

The present invention will now be illustrated in greater detail with reference to Examples, but the present invention is not construed as being limited thereto. In Examples, physical properties were measured or evaluated as follows.

(1) Melting point (Tm), glass transition temperature (Tg), and heat of fusion (_H)

Measured with a differential scanning calorimeter (DSC-7 manufactured by Perkin-Elmer Co.) at a rate of temperature rise of 10°C/min.

(2) Intrinsic viscosity (IV)

Measured at 20°C on a solution in a mixed solvent of phenol/tetrachloroethane (6/4 by weight).

(3) Determination of low-molecular weight compounds

(3-1) Free terephthalic acid content (free TPA)

A resin is dissolved in a mixed solvent of hexafluoroisopropyl alcohol/chloroform (1/1 by weight), diluted with chloroform, and concentrated under reduced pressure. A mixed solution of methanol/chloroform (1/1 by weight) is added to the concentrate to precipitate the polymer, followed by filtration through a glass filter. The mother liquor is analyzed on a high-performance liquid chromatograph (column: Radial Pack $C_{18}$ produced by Waters Inc.; eluent: 35% aqueous methanol solution).

(3-2) Bishydroxyethyl terephthalate (BHET) content and bishydroxyethyl terephthalate dimer (BHET2) content

The mother liquor as prepared in (3-1) above is analyzed on a high-performance liquid chromatograph (column: Resolv $C_{18}$ produced by Waters, Inc.; eluent for gradient elution: 0.5% acetic acid aqueous solution/acetonitrile = varying from 90/10 to 20/80 by volume for 40 minutes)

(4) Melt characteristics

(4-1) Melt viscosity (VI) and melt tension (MT)

Capillograph 1B manufactured by Toyo Seiki Co., Ltd. equipped at an orifice having an L/D ratio of 10 mm/1 mm with an entrance angle of 90° was used. VI and MT of a resin are measured under conditions of a heating temperature of (the melting point of polyester-A + 25°C), a speed of piston transfer of 10 mm/min, and, for measurement of MT, at a take-up speed of 50 m/min. The values obtained after 10 minutes' retention (10 minutes after completion of loading the cylinder with a sample) are used for evaluation.

(4-2) Die swell ratio

Capillograph 1B manufactured by Toyo Seiki Co., Ltd. equipped at an orifice having an L/D ratio of 10 mm/1 mm with an entrance angle of 90° was used. A resin is extruded downward at a temperature of (the melting point of polyester-A or polyester-A' + 40°C) and a piston transfer speed of 10 mm/min (shear rate: 121.6 $sec^{-1}$), and the diameter ($D_P$) of the polymer extruded from the orifice at a position of 11 mm apart from the lower end of the capillary, thereby to find a die swell ratio ($S_D$: $S_D$=$D_P$/$D_C$ ($D_C$: diameter of orifice)). Unless otherwise noted, the values obtained after 10 minutes' retention are used for evaluation.

(5) Film-forming processability

(5-1) Thin film forming properties

A resin is extruded into a film of 50 μm in thickness by use of a T-die extruder (Laboplastomill 30C150, Model D20-25, manufactured by Toyo Seiki Co., Ltd.). The thickness variation at the center of the extruded film is measured along the machine direction. Thin film forming properties are judged by the difference between the maximum thickness and the minimum thickness according to the following standard.

Very good ... not larger than 2 μm
Good ... larger than 2 μm and not larger than 3 μm
Moderate ... larger than 3 μm and not larger than 5 μm
Very bad ... larger than 5 μm

(5-2) Film forming properties

A resin is fed to an extruder, melted, extruded from a T-die having a slit width (slit thickness) of 1 mm and a slit length (width direction length) of 300 mm, and quenched to obtain a 300 μm thick unstretched film. The film properties are evaluated by measuring the width (width direction length) of the unstretched film and observing the waviness at the edges.

Very good ... width of 250 mm or larger, no waviness at edges
Good ... width of 250 mm or larger, slight waviness at edges
Moderate ... width of 250 mm or larger, waviness at edges
Very bad ... width of less than 250 mm

(6) Laminating extrudability

A polyester resin composition comprising polyester-A and copolyester-B at a prescribed mixing ratio or a polyester-A' is fed to an extruder, melted at a temperature of (the melting point of polyester-A or polyester-A' + 40°C), and extrusion laminated through a T-die having a slit width of 1 mm and a slit length of 400 mm onto a 0.25 mm thick metal plate to form a 30 μm thick coat. The air gap (the distance from the T-die to the metal plate) is 100 mm, and the laminating speed (line speed) is 100 m/min. The laminating extrudability is evaluated in terms of the neck-in (the difference

(mm) between the die width and the width (width direction length) of the coat on the metal plate) and the degree of waviness at the edges of the coat. The waviness at the edges is rated as follows.

Very good ... stable edges with no waviness
Good ... slightly wavy at the edges but acceptable for practical use
Moderate ... wavy at the edges
Very bad ... considerably wavy at the edges

(7) Tensile strength after heat treatment

The unstretched film prepared in (5-1) (thin film forming properties) is subjected to a heat treatment in an oven at 220°C for 6 minutes, which is equivalent to the conditions for drying and printing in can manufacture. The heat treated film is subjected to a tensile test to measure an elongation at break according to a method of ASTM-D882 at a room temperature.

Very good ... not less than 200%
Good ... not less than 100% and less than 200%
Moderate ... not less than 10% and less than 100%
Very bad ... less than 10%

(8) Metal can forming properties

A disk of 150 mm in diameter is punched out of a polyester/metal laminate, and deep drawn by using a punch and a die so that the film surface is made inside to produce a two-piece can having a diameter of 60 mm and a height of 75 mm. Cracks or delamination of the polyester coat were observed with the naked eye.

Good ... no defects
Moderate ... film delamination due to blisters and wrinkles in parts
Very bad ... cracks due to film breakage

(9) Heat resistance

A can which has suffered from no defects in can formation is heated in an oven at 220°C for 6 minutes and then subjected to an electric current test according to the following test method.

Electric current test:

A 1% aqueous solution of sodium chloride is put in a can. A voltage of 6V is applied to the can using a platinum electrode placed in the sodium chloride solution as a cathode and the metal plate as an anode, and the current is measured.

Very good ... less than 0.05 mA
Good ... not less than 0.05 mA and less than 0.1 mA
Moderate ... not less than 0.1 mA and less than 1 mA
Very bad ... not less than 1 mA

(10) Resistance to dents (impact resistance after heat treatment)

A can which has suffered no defects in can formation is heated in an oven at 220°C for 6 minutes, followed by cooling to room temperature. A steel ball weighting 0.5 kg is dropped from a height of 10 cm to the metal plate side of the cylindrical part of the can. Thereafter, the same electrical current test as in (9) above is carried out.

(11) Flavor properties

(11-1) Flavor properties-1 (after long-term storage)

A can which has suffered no defects in can formation is heated in an oven at 220°C for 6 minutes, followed by cooling to room temperature. The can is filled with distilled water and sealed. After the can is stored at 40°C for 3 months, the can is opened, and any change of the distilled water in smell and taste is examined organoleptically by 10 panel

members. Cans showing no change in smell nor taste score 1, those showing slight changes 2, those showing changes 3, and those showing considerable changes 4. The average of the scores is rated as follows.

Very good ... not higher than 1.5
Good ... higher than 1.5 and not higher than 2
Moderate ... higher than 2 and not higher than 3
Very bad ... higher than 3

(11-2) Flavor properties-2 (after retort treatment)

A can which has suffered no defects in can formation is heated at 220°C for 6 minutes in an oven and filled with distilled water. A film is cut into pieces of 10 cm x 10 cm. Ten cut pieces are immersed in 1 1 of distilled water. The can or the film is subjected to a retort treatment at 121°C for 2 hours, and changes in smell and taste of the distilled water are examined organoleptically. The organoleptic test and evaluation are carried out in the same manner as in (11-1).

(11-3) Flavor properties-3 (bottle)

A molded bottle is filled with distilled water and preserved at 40°C for 3 months. After opening, changes in smell and taste of the distilled water are examined organoleptically. The organoleptic test and evaluation are carried out in the same manner as in (11-1).

As described above, flavor properties are evaluated in three ways. In the organoleptic test for flavor properties-1, the storage conditions are relatively mild (40°C x 3 months), and yet free terephthalic acid having a small threshold value is influential.

In the organoleptic test for flavor properties-2, canned distilled water or distilled water containing film pieces is treated under severe conditions of 121°C x 2 hours. In this test, not only free terephthalic acid but other monomers or oligomers in the polyester resin composition are influential.

The test for flavor properties-3 is for evaluating the performance of the resin as other food containers, such as a bottle. The treatment is conducted under the mild conditions as used in the test for flavor properties-1 because bottles might be deformed at higher temperatures.

(12) Precipitation in retort treatment

Ten cut pieces (10 cm x 10 cm) of a film are immersed in 1 l of distilled water and retorted at 121°C for 2 hours. After the treatment, turbidity of the distilled water is observed with the naked eye.

Good ... no turbidity
Moderate ... slightly turbid
Very bad ... turbid

(13) Extrusion blow molding properties

Blown bottles are produced by means of an extrusion blow molding machine (JEB-3 manufactured by The Japan Steel Works, Ltd.). The molding properties are evaluated by observing draw-down of the parison as shown below.

Good ... satisfactory with no draw-down.
Moderate ... unsatisfactory with draw-down.

(14) Blown-film extrusion properties

A polyester resin composition or a polyester is molded into a blown film by means of a blow molding machine. The molding properties are evaluated in terms of thickness variation and fluctuation of the blown film.

Good ... thickness variation of less than ±10%, no fluctuation
Moderate ... thickness variation of not less than ±10% and less than ±20%, slight fluctuation
Very Bad ... thickness variation of not less than ±20%, considerable fluctuation

(I) Polyester resin composition-1 (coating with unstretched film)

EXAMPLES 1-1 TO 1-8 AND COMPARATIVE EXAMPLES 1-1 TO 1-10

Preparation of polyester-A:

In a stainless steel-made autoclave were put dimethyl terephthalate and dimethyl isophthalate at a terephthalic acid (TPA) to isophthalic acid (IPA) ratio shown in Table 1 below and 640 parts (by weight, hereinafter the same) of ethylene glycol per 1000 parts of the total acid component (molar ratio: 2.0). Unless otherwise indicated, all the parts are given by weight. Calcium acetate was added thereto as a catalyst for ester interchange in an amount of 900 ppm based on the total acid component to conduct ester interchange at 230°C. After completion of ester interchange, antimony trioxide as a catalyst for polymerization and trimethyl phosphate were added thereto in concentrations of 300 ppm and 450 ppm, respectively, based on the polymer. A prescribed amount of a polyfunctional compound was also added. Polycondensation reaction was carried out at 280°C under reduced pressure to obtain chips of polyester-A shown in Table 1-1 (A-1 to A-11).

Preparation of copolyester-B:

In the same apparatus as used above were put dimethyl terephthalate and a dimethyl ester of the dicarboxylic acid shown in Table 1-2 below and 1,4-butanediol (molar ratio: 2.0) in amounts to give 1000 parts of a polymer. To the mixture was added titanium tetrabutoxide as a catalyst for ester interchange (also serving as a catalyst for polymerization) in an amount shown in table 1-2 in terms of metallic Ti based on the polymer produced to conduct ester interchange at 210°C. After evaporation of methanol ceased, the system was subjected to polycondensation at 245°C under reduced pressure to obtain chips of copolyester-B (B-1, B-2, and B-5 to B-9). Further, B-2 was heated at 170°C in vacuo for 5 hours and 10 hours to obtain B-3 and B-4, respectively. The physical properties of these polymers are shown in Table 1-2. Preparation of polyester resin composition:

Polyester-A and copolyester-B were dried, and the chips were dry blended. The mixed chips were melt-kneaded in a twin-screw kneader (TEX 30 manufactured by The Japan Steel Works, Ltd.) at (the melting point of polyester-A + 25°C). At the time of melt-kneading, a prescribed amount of a hindered phenol organic compound (Irganox 1010 produced by Ciba Geigy, Ltd.) was added to prepare a polyester resin composition shown in Tables 1-3(1) and 1-3(2).

Film formation and preparation of polyester/metal laminate:

The resulting polyester resin composition was dried and extruded at (the melting point of polyester-A + 40°C) by means of a T-die extruder (Laboplastomill 30C150, D20-25 Model, manufactured by Toyo Seiki Co., Ltd.) to obtain an unstretched film having a thickness of 50 $\mu$m. The film was heat-bonded to a tin-plated steel plate by means of a hot press at 200 to 230°C and 10 kg/cm$^2$, followed by cooling to room temperature. The resulting film and polyester/metal laminate were evaluated according to the above-described methods. The results of evaluation are shown in Tables 1-3 (1) to 1-4(2). The polyester films, though unstretched, and polyester/metal laminates obtained in Examples proved excellent in can forming properties, heat resistance, resistance to dents, and flavor properties.

TABLE 1-1

| Polyester-A | Acid Component TPA/IPA | Polyfunctional Compound | IV | Tm | Free TPA |
|---|---|---|---|---|---|
| | (mol%) | (mol%) | (dl/g) | (°C) | (ppm) |
| A-1 | 100/0 | trimellitic acid (0.5) | 0.65 | 254 | 7.0 |
| A-2 | 88/12 | trimellitic acid (0.5) | 0.68 | 225 | 6.5 |
| A-3 | 88/12 | trimellitic acid (0.8) | 0.67 | 225 | 5.0 |
| A-4 | 88/12 | pentaerythritol (0.3) | 0.69 | 225 | 3.5 |
| A-5 | 88/12 | pentaerythritol (0.4) | 0.71 | 225 | 7.0 |
| A-6 | 88/12 | pentaerythritol (0.5) | 0.72 | 225 | 5.0 |
| A-7 | 88/12 | - | 0.70 | 225 | 6.0 |
| A-8 | 80/20 | - | 0.64 | 210 | 8.0 |
| A-9 | 88/12 | trimethylol-propane (1.0) | 0.69 | 225 | 4.5 |

(continued)

| Polyester-A | Acid Component TPA/IPA | Polyfunctional Compound | IV | Tm | Free TPA |
|---|---|---|---|---|---|
| | (mol%) | (mol%) | (dl/g) | (°C) | (ppm) |
| A-10 | 88/12 | pyromellitic anhydride (0.5) | 0.69 | 225 | 4.5 |
| A-11 | 88/12 | pyromellitic anhydride (2.2) | 0.65 (gelation occurred) | 224 | 6.0 |

TPA: terephthalic acid
IPA: isophthalic acid

TABLE 1-2

| Copolyester -B | Adipic Acid | Sebacic Acid | Dimeric Acid | Catalyst Ti | Heating Conditions | IV | Tm | Tg | Free TPA |
|---|---|---|---|---|---|---|---|---|---|
| | | | | (ppm) | | (dl/g) | (°C) | (°C) | (ppm) |
| B-1 | 10 | - | - | 20 | - | 0.82 | 209 | 17 | 9.0 |
| B-2 | 25 | - | - | 20 | - | 1.17 | 186 | -3 | 9.0 |
| B-3 | 25 | - | - | 20 | 170°C x 5 hrs | 1.48 | 185 | -3 | 5.0 |
| B-4 | 25 | - | - | 20 | 170°C x 10 hrs | 2.05 | 185 | -3 | 3.0 |
| B-5 | 30 | - | - | 20 | - | 1.12 | 178 | -11 | 8.0 |
| B-6 | - | 20 | - | 20 | - | 1.20 | 193 | 1 | 6.0 |
| B-7 | - | - | 10 | 20 | - | 0.95 | 210 | -12 | 12.0 |
| B-8 (homo polybutylene terephthalate) | - | - | - | 100 | - | 1.26 | 223 | 36 | 37.0 |
| B-9 | 50 | - | - | 100 | - | 0.70 | 140 | -35 | 60.0 |

TABLE 1-3(1)

| Example No. | Polyester-A/ Copolyester-B | Polyester -A (wt%) | Irganox (wt%) | IV (dl/g) | VI (poise) | MT (g) | Free TPA (ppm) |
|---|---|---|---|---|---|---|---|
| 1-1 | A-2/B-3 | 50 | 0.2 | 1.05 | 4900 | 0.53 | 5.8 |
| 1-2 | A-5/B-3 | 75 | 0.2 | 0.90 | 5000 | 1.6 | 7.0 |
| 1-3 | A-1/B-1 | 30 | 0.1 | 0.76 | 4500 | 0.25 | 14.0 |
| 1-4 | A-1/B-4 | 90 | 0.1 | 0.77 | 3500 | 0.30 | 6.5 |
| 1-5 | A-9/B-3 | 50 | 0.05 | 1.06 | 5100 | 1.8 | 5.5 |
| 1-6 | A-10/B-3 | 50 | 0.02 | 1.06 | 5500 | 2.5 | 5.5 |
| 1-7 | A-5/B-6 | 50 | 0.1 | 0.95 | 5300 | 2.1 | 7.0 |
| 1-8 | A-5/B-7 | 50 | 0.1 | 0.82 | 5200 | 2.0 | 11 |

TABLE 1-3(2)

| Comparative Example No. | Polyester-A/ Copolyester-B | Polyester -A (wt%) | Irganox (wt%) | IV (dl/g) | VI (poise) | MT (g) | Free TPA (ppm) |
|---|---|---|---|---|---|---|---|
| 1-1 | A-8/B-2 | 75 | 0.2 | 0.76 | 3600 | 0.1 | 6.0 |

(continued)

| Comparative Example No. | Polyester-A/ Copolyester-B | Polyester -A (wt%) | Irganox (wt%) | IV (dl/g) | VI (poise) | MT (g) | Free TPA (ppm) |
|---|---|---|---|---|---|---|---|
| 1-2 | A-11/B-3 | 50 | 0.2 | 1.04 | 9000 | 2.7 | 6.0 |
| 1-3 | A-1/- | 100 | 0.2 | 0.64 | 3100 | 0.4 | 7.5 |
| 1-4 | A-1/B-1 | 20 | 0.2 | 0.76 | 3200 | 0.18 | 10 |
| 1-5 | A-5/B-8 | 50 | 0.2 | 0.97 | 4500 | 0.23 | 25 |
| 1-6 | A-5/B-9 | 50 | 0.2 | 0.69 | 3800 | 0.20 | 35 |
| 1-7 | A-1/Himiran* | 80 | 0.2 | - | 5700 | 0.7 | 40 |
| 1-8 | A-1/Hitorel** | 70 | 0.2 | - | 4700 | 0.4 | 35 |
| 1-9 | A-5/B-3 | 75 | 0 | 0.88 | 4900 | 1.6 | 7.0 |
| 1-10 | A-9/B-3 | 50 | 0 | 1.04 | 4900 | 1.7 | 6.0 |

Note: * Himiran 1706, an ionomer resin produced by Du Pont-Mitsui Polychemicals Co., Ltd.
** Hitorel 4057, a polyester elastomer produced by Du Pont-Mitsui Polychemicals Co., Ltd.

TABLE 1-4(1)

| Example No. | Thin Film Forming Properties | Tensile Strength after Heat Treatment | Metal Can Forming Properties | Heat Resistance | Resistance to Dents | Flavor Properties -1 | Flavor Properties -2 |
|---|---|---|---|---|---|---|---|
| 1-1 | very good | very good | good | very good | very good | very good | good |
| 1-2 | very good | very good | good | very good | very good | very good | good |
| 1-3 | good | very good | good | very good | good | good | good |
| 1-4 | very good | good | good | very good | good | very good | good |
| 1-5 | very good | very good | good | very good | very good | very good | good |
| 1-6 | very good | very good | good | very good | very good | very good | good |
| 1-7 | very good | very good | good | very good | good | very good | good |
| 1-8 | very good | very good | good | very good | good | good | good |

TABLE 1-4(2)

| Comparative Example No. | Thin Film Forming Properties | Tensile Strength after Heat Treatment | Metal Can Forming Properties | Heat Resistance | Resistance to Dents | Flavor Properties -1 | Flavor Properties -2 |
|---|---|---|---|---|---|---|---|
| 1-1 | moderate | moderate | good | A hole was made in the coat after heat treatment | | - | - |
| 1-2 | very bad | moderate | moderate | moderate | good | very good | good |
| 1-3 | very good | very bad | good | moderate | very bad | - | good |
| 1-4 | moderate | moderate | good | A hole was made in the coat after heat treatment | | - | - |
| 1-5 | good | moderate | very bad | - | - | - | - |
| 1-6 | good | good | good | moderate | very bad | moderate | moderate |

(continued)

| Comparative Example No. | Thin Film Forming Properties | Tensile Strength after Heat Treatment | Metal Can Forming Properties | Heat Resistance | Resistance to Dents | Flavor Properties -1 | Flavor Properties -2 |
|---|---|---|---|---|---|---|---|
| 1-7 | good | very good | good | very good | good | moderate | very bad |
| 1-8 | good | moderate | good | good | moderate | moderate | moderate |
| 1-9 | very good | very bad | good | good | very bad | very good | good |
| 1-10 | very good | very bad | good | good | very bad | very good | good |

(II) Polyester resin composition-2 (coating with stretched film)

EXAMPLES 2-1 TO 2-3 AND COMPARATIVE EXAMPLES 2-1 TO 2-5

Preparation of stretched film and polyester/metal laminate:

Polyester-A shown in Table 1-1 and copolyester-B shown in Table 1-2 were compounded at a ratio shown in Table 2-1, and 0.5 wt% of Irganox 1010 (produced by Ciba Geigy, Ltd.) was added thereto. The resulting polyester resin composition was extruded from a single-screw extruder (screw diameter: 50 mm; L/D: 32) through a T-die (width: 1 mm; length: 300 mm) and quenched to obtain an unstretched film having a thickness of 300 μm. In Example 2-3 a polyester resin composition obtained by kneading at (the melting point of polyester-A + 65°C) was used. In Comparative Example 2-5, Irganox was not added. The unstretched film was biaxially stretched at 95°C to obtain a stretched film having a thickness of 30 μm. The stretched film was heat bonded to a 0.25 mm thick aluminum plate by means of a hot press at 200 to 230°C and 10 kg/cm$^2$, followed by cooling to room temperature. The resulting film and polyester/metal laminate were evaluated according to the above-described methods. The results of evaluation are shown in Table 2-2.

TABLE 2-1

| | Polyester-A/ Copolyester-B | Polyester - A (wt%) | Irganox (wt%) | IV (dl/g) | Tm (°C) | _H (J/g) | Free TPA (ppm) |
|---|---|---|---|---|---|---|---|
| Example 2-1 | A-5/B-2 | 50 | 0.5 | 0.93 | 184/224 | 23 | 8.0 |
| Example 2-2 | A-5/B-3 | 50 | 0.5 | 1.05 | 184/224 | 23 | 6.0 |
| Example 2-3 | A-5/B-3 | 50 | 0.5 | 1.03 | -/217 | 17 | 8.5 |
| Comparative Example 2-1 | A-5/B-8 | 50 | 0.5 | 0.97 | 220/224 | 25 | 24 |
| Comparative Example 2-2 | A-5/- | 100 | 0.5 | 0.69 | 225 | 27 | 7.0 |
| Comparative Example 2-3 | -/B-3 | 0 | 0.5 | 1.40 | 184 | 23 | 6.0 |
| Comparative Example 2-4 | A-8/B-3 | 50 | 0.5 | 0.86 | 184/208 | 21 | 7.0 |
| Comparative Example 2-5 | A-5/B-3 | 50 | 0 | 0.98 | 187/217 | 20 | 1.5 |

TABLE 2-2

| | Film-forming Properties | Metal Can Forming Properties | Heat Resistance | Resistance to Dents | Flavor Properties-1 | Flavor Properties-2 |
|---|---|---|---|---|---|---|
| Example 2-1 | very good | good | very good | very good | very good | good |

(continued)

| | Film-forming Properties | Metal Can Forming Properties | Heat Resistance | Resistance to Dents | Flavor Properties-1 | Flavor Properties-2 |
|---|---|---|---|---|---|---|
| Example 2-2 | very good | good | very good | very good | very good | good |
| Example 2-3 | moderate | good | very good | good | very good | good |
| Comparative Example 2-1 | good | good | moderate | moderate | moderate | moderate |
| Comparative Example 2-2 | very good | good | good | very bad | very good | very good |
| Comparative Example 2-3 | very bad | good | A hole was made in the coat after heat treatment | | - | - |
| Comparative Example 2-4 | moderate | good | A hole was made in the coat after heat treatment | | - | - |
| Comparative Example 2-5 | very good | good | moderate | very bad | good | good |

(III) Polyester resin composition-3 (coating by extrusion lamination)

EXAMPLES 3-1 TO 3-10 AND COMPARATIVE EXAMPLES 3-1 TO 3-6

Polyester-A shown in Table 1-1 and copolyester-B shown in Table 1-2 were compounded at a ratio shown in Tables 3-1 and 3-2, and 0.5 wt% of Irganox 1010 (produced by Ciba Geigy, Ltd.) was added thereto to prepare a polyester resin composition. The resin composition was extrusion laminated with a thickness of 30 μm onto a 0.25 mm thick aluminum plate by means of a single-screw extruder (screw diameter: 50 mm; L/D: 32; retention time: 5 min) through a T-die (width: 1 mm; length: 400 mm). The temperature of the extruder was set at (the melting point of polyester-A + 40°C), the air gap (the distance from the T-die to the aluminum plate) was 100 mm, and the laminating speed was 100 m/min. The resulting polyester/metal laminate was evaluated in accordance with the above-described methods. The results obtained are shown in Tables 3-3 and 3-4.

TABLE 3-1

| Example No. | Polyester-A/ Copolyester - B | Polyester-A (wt%) | IV (dl/g) | Tm (°C) | _H (J/g) | Free TPA (ppm) | VI (poise) | MT (g) |
|---|---|---|---|---|---|---|---|---|
| 3-1 | A-2/B-3 | 50 | 1.05 | 184/224 | 23 | 5.8 | 4900 | 0.53 |
| 3-2 | A-3/B-3 | 50 | 1.03 | 184/224 | 23 | 5.0 | 5800 | 1.50 |
| 3-3 | A-4/B-3 | 50 | 1.08 | 184/224 | 23 | 3.8 | 4300 | 1.00 |
| 3-4 | A-5/B-3 | 50 | 1.09 | 184/224 | 23 | 6.0 | 5000 | 1.60 |
| 3-5 | A-6/B-3 | 50 | 1.09 | 184/224 | 23 | 5.0 | 5500 | 1.80 |
| 3-6 | A-4/B-3 | 30 | 1.05 | 184/224 | 23 | 4.5 | 5800 | 1.30 |
| 3-7 | A-4/B-3 | 90 | 0.75 | 184/224 | 22 | 3.0 | 3800 | 0.80 |
| 3-8 | A-4/B-1 | 50 | 0.93 | 200/224 | 25 | 6.8 | 4100 | 0.90 |
| 3-9 | A-4/B-2 | 50 | 0.93 | 184/224 | 23 | 7.0 | 3500 | 1.00 |
| 3-10 | A-4/B-5 | 50 | 0.90 | 170/224 | 21 | 6.0 | 4500 | 1.20 |

TABLE 3-2

| Comparative Example No. | Polyester-A/ Copolyester -B | Polyester -A (wt%) | IV (dl/g) | Tm (°C) | _H (J/g) | Free TPA (ppm) | VI (poise) | MT (g) |
|---|---|---|---|---|---|---|---|---|
| 3-1 | A-4/B-3 | 10 | 1.30 | 184/224 | 24 | 5.0 | 5500 | 1.30 |
| 3-2 | -/B-3 | 0 | 1.42 | 186/- | 24 | 6.0 | 7000 | 2.00 |
| 3-3 | A-4/- | 100 | 0.65 | -/224 | 22 | 3.0 | 6500 | 0.80 |
| 3-4 | A-4/B-8 | 50 | 0.98 | 220/224 | 24 | 23 | 4000 | 0.50 |
| 3-5 | A-4/B-9 | 50 | 0.68 | 135/224 | 16 | 35 | 3600 | 0.18 |
| 3-6 | A-8/B-3 | 50 | 1.03 | 184/208 | 21 | 8.0 | 4100 | 0.15 |

TABLE 3-3

| Example No. | Laminating Extrudability | | Metal Can Forming Properties | Heat Resistance | Resistance to Dents | Flavor Properties-1 | Flavor Properties-2 |
|---|---|---|---|---|---|---|---|
| | Neck-in (mm) | Wavy Edges | | | | | |
| 3-1 | 110 | good | good | very good | very good | very good | good |
| 3-2 | 87 | very good | good | very good | very good | very good | good |
| 3-3 | 90 | very good | good | very good | very good | very good | good |
| 3-4 | 80 | very good | good | very good | very good | very good | good |
| 3-5 | 75 | very good | good | very good | very good | very good | good |
| 3-6 | 110 | very good | good | very good | very good | very good | good |
| 3-7 | 85 | very good | good | good | good | very good | good |
| 3-8 | 100 | very good | good | very good | very good | very good | good |
| 3-9 | 95 | very good | good | very good | very good | very good | good |
| 3-10 | 95 | very good | good | very good | very good | very good | good |

TABLE 3-4

| Comparative Example No. | Laminating Extrudability | | Metal Can Forming Properties | Heat Resistance | Resistance to Dents | Flavor Properties -1 | Flavor Properties 2 |
|---|---|---|---|---|---|---|---|
| | Neck-in (mm) | Wavy Edges | | | | | |
| 3-1 | 130-150 | moderate | good | A hole was made in the coat after heat treatment | | - | - |

(continued)

| Comparative Example No. | Laminating Extrudability | | Metal Can Forming Properties | Heat Resistance | Resistance to Dents | Flavor Properties -1 | Flavor Properties 2 |
|---|---|---|---|---|---|---|---|
| | Neck-in (mm) | Wavy Edges | | | | | |
| 3-2 | Break of film occurred | - | - | - | - | - | - |
| 3-3 | 70 | very good | good | very bad | very bad | - | - |
| 3-4 | 120 | good | moderate | moderate | very bad | moderate | moderate |
| 3-5 | 125 | good | good | very bad | very bad | moderate | moderate |
| 3-6 | 150-170 | moderate | good | A hole was made in the coat after heat treatment | | - | - |

EXAMPLES 3-11 TO 3-18 AND COMPARATIVE EXAMPLES 3-7 TO 3-10

Preparation of polyester-A:

In a stainless steel-made autoclave were put dimethyl terephthalate and dimethyl isophthalate at a terephthalic acid (TPA) to isophthalic acid (IPA) ratio shown in Table 3-5 below and 640 parts (molar ratio: 2.0) of ethylene glycol per 1000 parts of the total acid component. Calcium acetate was added thereto as a catalyst for ester interchange in an amount of 900 ppm based on the total acid component to conduct ester interchange at 230°C. After completion of ester interchange, antimony trioxide as a catalyst for polymerization and trimethyl phosphate were added thereto in concentrations of 300 ppm and 450 ppm, respectively, based on the polymer. A prescribed amount of a polyfunctional compound was also added. Polycondensation reaction was carried out at 280°C under reduced pressure to obtain polyester-A shown in Table 3-5.

Preparation of copolyester-B:

In the same apparatus as used above were put dimethyl terephthalate and a dimethyl ester of the dicarboxylic acid shown in Table 3-6 below and 1,4-butanediol (molar ratio: 2.0) in amounts to give 1000 parts of a polymer. To the mixture was added titanium tetrabutoxide as a catalyst for ester interchange (also serving as a catalyst for polymerization) in the amount shown in table 3-6 in terms of metallic Ti based on the polymer produced to conduct ester interchange at 210°C. After evaporation of methanol ceased, the system was subjected to polycondensation at 245°C under reduced pressure to obtain chips of a polymer. The polymer was heated at a temperature of (the melting point - 20°C) in vacua for 10 hours to obtain copolyester-B (B-10 to B-18), except that B-16 to B-18 were as obtained by polycondensation without being subjected to the heat treatment.

A-13 (polyester-A) shown in Table 3-5 and B-12 (copolyester-B) shown in Table 3-6 were compounded at a ratio shown in Table 3-7, and 0.05 wt% of $\alpha$-tocopherol (produced by Riken Vitamin Co., Ltd.) was added thereto to prepare a polyester resin composition. The resin composition was extrusion laminated in the same manner as in Examples 3-1 to 3-10 to prepare a polyester/metal laminate. The resulting laminate was evaluated according to the above-described methods. The results obtained are shown in Table 3-8.

TABLE 3-5

| Polyester-A No. | Acid Component TPA/IPA (mol%) | Polyfunctional Compound (mol%) | IV (dl/g) | Tm (°C) | Free TPA (ppm) |
|---|---|---|---|---|---|
| A-12 | 88/12 | pentaerythritol (0.3) | 0.73 | 225 | 3.0 |
| A-13 | 88/12 | pentaerythritol (0.35) | 0.71 | 225 | 3.5 |
| A-14 | 100/0 | pentaerythritol (0.35) | 0.74 | 255 | 3.3 |
| A-15 | 95/5 | pentaerythritol (0.35) | 0.74 | 245 | 3.0 |

(continued)

| Polyester-A No. | Acid Component TPA/IPA (mol%) | Polyfunctional Compound (mol%) | IV (dl/g) | Tm (°C) | Free TPA (ppm) |
|---|---|---|---|---|---|
| A-16 | 80/20 | pentaerythritol (0.35) | 0.64 | 210 | 8.0 |
| A-17 | 95/5 | - | 0.74 | 245 | 3.0 |
| A-18 | 100/0 | - | 0.70 | 255 | 4.3 |

TABLE 3-6

| Co-polyester-B No. | Comonomer Component (mol%) | | Catalyst Ti (ppm) | Heat Treating Conditions | IV (dl/g) | Tm (°C) | Tg (°C) | Free TPA (ppm) |
|---|---|---|---|---|---|---|---|---|
| | Adipic Acid | Isophthalic Acid | | | | | | |
| B-10 | 10 | - | 20 | 189°Cx10hrs | 1.20 | 209 | 17 | 5.0 |
| B-11 | 25 | - | 20 | 166°Cx10hrs | 1.24 | 186 | -3 | 3.0 |
| B-12 | 25 | - | 20 | 165°Cx10hrs | 1.48 | 185 | -3 | 3.0 |
| B-13 | 30 | - | 20 | 158°Cx10hrs | 1.22 | 178 | -11 | 6.0 |
| B-14 | - | - | 20 | 203°Cx10hrs | 1.48 | 223 | 36 | 7.0 |
| B-15 | 45 | - | 20 | 128°Cx10hrs | 0.71 | 148 | -32 | 8.0 |
| B-16 | 25 | - | 100 | - | 1.00 | 186 | -3 | 43 |
| B-17 | 30 | - | 100 | - | 1.02 | 178 | -11 | 36 |
| B-18 | - | 25 | 100 | - | 0.80 | 187 | 30 | 39 |

TABLE 3-7

| | A-13 (wt%) | IV (dl/g) | Tm (°C) | Free TPA (ppm) | Die Swell Ratio |
|---|---|---|---|---|---|
| Example 3-11 | 30 | 1.18 | 184/220 | 4.3 | 2.0 |
| Example 3-12 | 40 | 1.15 | 184/222 | 4.5 | 2.1 |
| Example 3-13 | 45 | 1.11 | 184/223 | 4.2 | 2.1 |
| Example 3-14 | 50 | 1.09 | 184/224 | 4.3 | 1.9 |
| Example 3-15 | 55 | 1.05 | 183/224 | 3.8 | 1.8 |
| Example 3-16 | 60 | 0.96 | 180/224 | 4.0 | 1.5 |
| Example 3-17 | 70 | 0.90 | 179/224 | 3.6 | 1.4 |
| Example 3-18 | 80 | 0.88 | 178/224 | 3.9 | 1.5 |
| Comparative Example 3-7 | 100 | 0.69 | 225 | 4.0 | 1.7 |
| Comparative Example 3-8 | 92 | 0.84 | -/224 | 2.9 | 1.6 |
| Comparative Example 3-9 | 20 | 1.24 | 185/- | 4.5 | 1.5 |
| Comparative Example 3-10 | 0 | 1.30 | 185 | 6.0 | 1.1 |

TABLE 3-8

| | Laminating Extrudability | | Metal Can Forming Properties | Heat Resistance | Resistance to Dents | Flavor Properties-2 |
|---|---|---|---|---|---|---|
| | Neck-in (mm) | Wavy Edges | | | | |
| Example 3-11 | 105 | very good | good | very good | very good | good |
| Example 3-12 | 100 | very good | good | very good | very good | good |
| Example 3-13 | 95 | very good | good | very good | very good | good |
| Example 3-14 | 85 | very good | good | very good | very good | good |
| Example 3-15 | 85 | very good | good | very good | very good | good |
| Example 3-16 | 85 | very good | good | very good | very good | good |
| Example 3-17 | 83 | very good | good | very good | good | good |
| Example 3-18 | 83 | very good | good | very good | good | good |
| Comparative Example 3-7 | 65 | very good | good | good | very bad | good |
| Comparative Example 3-8 | 75 | good | good | good | very bad | good |
| Comparative Example 3-9 | 130-140 | moderate | good | A hole was made in the coat after heat treatment | | - |
| Comparative Example 3-10 | 150-200 (draw down) | very bad | good | A hole was made in the coat after heat treatment | | - |

EXAMPLES 3-19 TO 3-30 AND COMPARATIVE EXAMPLES 3-11 TO 3-16

Polyester-A selected from Tables 1-1 and 3-5 and copolyester-B selected from Table 3-6 were compounded at a ratio shown in Tables 3-9 and 3-10 below, and a prescribed amount of α-tocopherol (produced by Riken Vitamin Co., Ltd.) was added thereto. The composition and physical properties of the resulting polyester resin compositions are shown in Tables 3-9 and 3-10. A polyester/metal laminate was prepared using each of the resin compositions in the same manner as in Examples 3-1 to 3-10. The resulting laminate was evaluated according to the above-described methods. The results obtained are shown in Tables 3-11 and 3-12 below.

TABLE 3-9

| Example No. | Polyester-A/ Copolyester-B | Polyester-A (wt%) | α-Tocopherol (wt%) | IV (dl/g) | Free TPA (ppm) | Die Swell Ratio |
|---|---|---|---|---|---|---|
| 3-19 | A-2/B-11 | 50 | 0.05 | 0.96 | 4.3 | 1.3 |
| 3-20 | A-3/B-11 | 50 | 0.05 | 0.98 | 4.0 | 1.3 |
| 3-21 | A-4/B-11 | 50 | 0.05 | 0.95 | 3.2 | 1.4 |
| 3-22 | A-12/B-11 | 50 | 0.05 | 1.00 | 3.3 | 1.4 |
| 3-23 | A-13/B-11 | 50 | 0.05 | 0.98 | 3.8 | 1.5 |
| 3-24 | A-14/B-11 | 50 | 0.05 | 1.02 | 3.0 | 1.5 |
| 3-25 | A-15/B-11 | 50 | 0.05 | 0.90 | 3.6 | 2.2 |
| 3-26 | A-13/B-10 | 50 | 0.05 | 0.98 | 4.9 | 1.3 |
| 3-27 | A-13/B-13 | 50 | 0.03 | 0.95 | 5.0 | 1.5 |
| 3-28 | A-13/B-6 | 50 | 0.03 | 1.04 | 4.5 | 1.5 |
| 3-29 | A-13/B-16 | 50 | 0.05 | 0.96 | 25.5 | 1.5 |

(continued)

| Example No. | Polyester-A/ Copolyester-B | Polyester-A (wt%) | α-Tocopherol (wt%) | IV (dl/g) | Free TPA (ppm) | Die Swell Ratio |
|---|---|---|---|---|---|---|
| 3-30 | A-13/B-17 | 50 | 0.05 | 1.02 | 25.0 | 1.5 |

TABLE 3-10

| Comparative Example No. | Polyester-A/ Copolyester-B | Polyester-A (wt%) | α-Tocopherol (wt%) | IV (dl/g) | Free TPA (ppm) | Die Swell Ratio |
|---|---|---|---|---|---|---|
| 3-11 | A-7/B-11 | 50 | 0.05 | 0.95 | 4.0 | 0.9 |
| 3-12 | A-16/B-11 | 50 | 0.05 | 0.90 | 5.0 | 1.3 |
| 3-13 | A-13/B-14 | 50 | 0.05 | 0.98 | 6.0 | 0.9 |
| 3-14 | A-13/B-15 | 50 | 0.05 | 0.65 | 7.0 | 1.0 |
| 3-15 | A-13/B-18 | 50 | 0.05 | 0.76 | 25.0 | 1.5 |
| 3-16 | A-13/B-6 | 50 | 0 | 1.02 | 4.5 | 1.5 |

TABLE 3-11

| Example No. | Laminating Extrudability | | Metal Can Forming Properties | Heat Resistance | Resistance to Dents | Flavor Properties -1 | Flavor Properties -2 |
|---|---|---|---|---|---|---|---|
| | Neck-in (mm) | Wavy Edges | | | | | |
| 3-19 | 110 | good | good | very good | very good | very good | good |
| 3-20 | 100 | good | good | very good | very good | very good | good |
| 3-21 | 95 | very good | good | very good | very good | very good | good |
| 3-22 | 93 | very good | good | very good | very good | very good | good |
| 3-23 | 90 | very good | good | very good | very good | very good | good |
| 3-24 | 95 | very good | good | very good | very good | very good | good |
| 3-25 | 85 | very good | good | very good | very good | very good | good |
| 3-26 | 100 | good | good | very good | good | very good | good |
| 3-27 | 95 | very good | good | very good | very good | very good | good |
| 3-28 | 97 | very good | good | very good | very good | very good | good |
| 3-29 | 105 | very good | good | very good | very good | moderate | moderate |
| 3-30 | 105 | very good | good | very good | very good | moderate | moderate |

TABLE 3-12

| Comparative Example No. | Laminating Extrudability | | Metal Can Forming Properties | Heat Resistance | Resistance to Dents | Flavor Properties-1 | Flavor Properties-2 |
|---|---|---|---|---|---|---|---|
| | Neck-in (mm) | Wavy Edges | | | | | |
| 3-11 | 140-170 | moderate | good | very good | very good | very good | good |
| 3-12 | 120 | good | good | A hole was made after heat in the coat Treatment | | - | - |
| 3-13 | 130-140 | moderate | very bad | very bad | - | - | - |
| 3-14 | 125 | good | good | moderate | moderate | very good | good |
| 3-15 | 100 | good | good | moderate | very bad | moderate | moderate |
| 3-16 | 97 | very good | good | moderate | very bad | very good | good |

EXAMPLES 3-31 TO 3-34

Polyester-A selected from Table 3-5, copolyester-B selected from Table 3-6, and Irganox 1010 (produced by Ciba Geigy, Ltd.) were compounded at a ratio shown in Table 3-13 below. A polyester/metal laminate was prepared using the resulting polyester resin composition in the same manner as in Examples 3-1 to 3-10, and the laminate was evaluated according to the above-described methods. The composition and physical properties of the polyester resin compositions are shown in Table 3-13, and the results of evaluation of the laminate are shown in Table 3-14 below.

TABLE 3-13

| Example No. | Polyester-A/ Copolyester-B | Polyester-A (wt%) | Irganox (wt%) | IV (dl/g) | Free TPA (ppm) | Die Swell Ratio |
|---|---|---|---|---|---|---|
| 3-31 | A-13/B-13 | 50 | 0.1 | 0.95 | 5.5 | 1.5 |
| 3-32 | A-13/B-6 | 50 | 0.1 | 1.04 | 5.3 | 1.5 |
| 3-33 | A-13/B-13 | 50 | 0.05 | 0.96 | 5.5 | 1.5 |
| 3-34 | A-13/B-6 | 50 | 0.05 | 1.02 | 5.4 | 1.5 |

TABLE 3-14

| Example No. | Laminating Extrudability | | Metal Can Forming Properties | Heat Resistance | Resistance to Dents | Flavor Properties-1 | Flavor Properties-2 |
|---|---|---|---|---|---|---|---|
| | Neck-in (mm) | Wavy Edges | | | | | |
| 3-31 | 95 | very good | good | very good | very good | very good | good |
| 3-32 | 97 | very good | good | very good | very good | very good | good |
| 3-33 | 95 | very good | good | very good | very good | very good | good |
| 3-34 | 97 | very good | good | very good | very good | very good | good |

The die swell ratio of a polyester resin composition largely varies depending on the kinds and mixing ratio of

polyester-A and copolyester-B to be combined and the time period of melting. Fig. 1 through 3 show variations of die swell ratio with the mixing ratio and the melting time in the polyester resin compositions comprising polyester-A and copolyester-B. As shown in Fig. 1, where A-13 (polyester-A containing a polyfunctional compound) and B-12 (copolyester-B containing an adipic acid unit) are combined, with the proportion of A-13 falling within a range of from 30 to 90 wt%, in which range the resin composition satisfies the requirements of molding properties and resistance to dents, the composition has a die swell ratio of 1.3 or higher and is therefore excellent in extrudability in high-speed extrusion lamination. On the other hand, the combination of A-17 (polyester containing no polyfunctional compound) and B-12 shown in Fig. 2 and the combination of A-13 and B-14 (polyester having no comonomer unit) shown in Fig. 3 both fail to secure a die swell ratio necessary for achieving high-speed laminating extrusion.

An unstretched film comprising a blend of A-13 (polyester-A containing a polyfunctional compound) and B-12 (copolyester-B having an adipic acid unit) was prepared in the same manner as in Example 1-1. Electron microscopic observation of the cross section of the unstretched film cut in parallel to the machine direction revealed that the film has a structure in which the phase of polyester-A and the phase of copolyester-B are independent of each other with no compatibility. As a typical example, the electron micrograph of the cross section of the film comprising 50 wt% of A-13 (polyester-A) and 50 wt% of B-12 (copolyester-B) is shown in Fig. 4. It is considered that the blend of A-13 (polyester-A containing a polyfunctional compound) and B-12 (copolyester-B having an adipic acid unit) exhibits a convex die swell ratio curve owing to such a cross-sectional structure showing an incompatible character.

(IV) Polyester composite film

EXAMPLES 4-1 TO 4-10 AND COMPARATIVE EXAMPLES 4-1 TO 4-7

Preparation of polyester composite film:

A polyester resin composition comprising polyester-A selected from Tables 1-1 and 3-5, copolyester-B selected from Tables 1-2 and 3-6, and 0.2 wt% of Irganox 1010 (produced by Ciba Geigy, Ltd.) (except that Irganox 1010 was not added to the composition of Comparative Example 4-7) as an adhesive layer and polyester-A selected from Tables 1-1 and 3-5 as a base layer were separately melted in respective extruders, laminated in a die, and co-extruded from a T-die having a slit width of 1 mm and a slit length of 300 mm, and quenched to obtain an unstretched film having a thickness of 300 μm.

The unstretched film was heated to 90°C, stretched 3.0 times in the machine direction and 3.5 times in the transverse direction, and subjected to heat setting at 200°C to obtain a biaxially stretched composite film having a thickness of 25 μm, in which the thickness ratio of the base layer to the adhesive layer was approximately 2:3.

Preparation of laminate steel plate and evaluation:

The resulting polyester composite film was laminated on a tin-free steel plate (electrolytic chromium-treated steel plate) heated to 230 to 260°C with the adhesive layer contacting with the metal plate. The laminate was pressed with a roll heated to 150°C on the side of the polyester composite film followed by quenching to obtain a polyester/metal laminate. The resulting laminate was evaluated in accordance with the above-described methods. The results obtained are shown in Tables 4-1(1) through 4-4 below. It is seen that the polyester composite films of the invention exhibited excellent molding properties, resistance to dents, and flavor properties, while the comparative films were inferior particularly in film-forming properties and resistance to dents.

TABLE 4-1(1)

| Example No. | Base Layer | | | Adhesive Layer | | | |
|---|---|---|---|---|---|---|---|
| | Polyester | Tm (°C) | IV (dl/g) | Polyester-A/ Copolyester-B | Polyester-A (wt%) | IV (dl/g) | Irganox (wt%) |
| 4-1 | A-7 | 225 | 0.70 | A-3/B-3 | 50 | 0.93 | 0.2 |
| 4-2 | A-7 | 225 | 0.70 | A-5/B-3 | 50 | 0.99 | 0.2 |
| 4-3 | A-7 | 225 | 0.70 | A-4/B-3 | 30 | 0.95 | 0.2 |
| 4-4 | A-7 | 225 | 0.70 | A-4/B-3 | 90 | 0.75 | 0.2 |
| 4-5 | A-7 | 225 | 0.70 | A-4/B-10 | 50 | 0.83 | 0.2 |
| 4-6 | A-7 | 225 | 0.70 | A-4/B-2 | 50 | 0.85 | 0.2 |

(continued)

| Example No. | Base Layer | | | Adhesive Layer | | | |
|---|---|---|---|---|---|---|---|
| | Polyester | Tm (°C) | IV (dl/g) | Polyester-A/ Copolyester-B | Polyester-A (wt%) | IV (dl/g) | Irganox (wt%) |
| 4-7 | A-7 | 225 | 0.70 | A-4/B-5 | 50 | 0.80 | 0.2 |
| 4-8 | A-17 | 245 | 0.74 | A-4/B-3 | 50 | 0.98 | 0.2 |
| 4-9 | A-18 | 255 | 0.70 | A-4/B-3 | 50 | 0.98 | 0.2 |
| 4-10 | A-13 | 225 | 0.71 | A-3/B-3 | 50 | 0.93 | 0.2 |

TABLE 4-1(2)

| Polyester | Free TPA (ppm) | BHET (ppm) | BHET2 (ppm) |
|---|---|---|---|
| A-7 | 6.0 | 35 | 130 |
| A-17 | 3.0 | 36 | 138 |
| A-18 | 4.3 | 42 | 150 |
| A-13 | 5.0 | 190 | 700 |

TABLE 4-2(1)

| Comparative Example No. | Base Layer | | | Adhesive Layer | | | |
|---|---|---|---|---|---|---|---|
| | Polyester | Tm (°C) | IV (dl/g) | Polyester-A/ Copolyester-B | Polyester -A (wt%) | IV (dl/g) | Irganox (wt%) |
| 4-1 | A-7 | 225 | 0.70 | A-4/B-3 | 10 | 1.20 | 0.2 |
| 4-2 | A-7 | 225 | 0.70 | -/B-3 | 0 | 1.42 | 0.2 |
| 4-3 | A-7 | 225 | 0.70 | A-4/- | 100 | 0.65 | 0.2 |
| 4-4 | A-7 | 225 | 0.70 | A-4/B-8 | 50 | 0.88 | 0.2 |
| 4-5 | A-7 | 225 | 0.70 | A-4/B-9 | 50 | 0.83 | 0.2 |
| 4-6 | A-17 | 245 | 0.74 | A-8/B-3 | 50 | 0.93 | 0.2 |
| 4-7 | A-17 | 245 | 0.74 | A-4/B-3 | 50 | 0.98 | 0 |

TABLE 4-2(2)

| Polyester | Free TPA (ppm) | BHET (ppm) | BHET2 (ppm) |
|---|---|---|---|
| A-7 | 6.0 | 35 | 130 |
| A-17 | 3.0 | 36 | 138 |

TABLE 4-3

| Example No. | Film-forming Properties | Metal Can Forming Properties | Heat Resistance | Resistance to Dents | Flavor Properties-1 | Flavor Properties-2 |
|---|---|---|---|---|---|---|
| 4-1 | good | good | very good | very good | very good | very good |
| 4-2 | good | good | very good | very good | very good | very good |

(continued)

| Example No. | Film-forming Properties | Metal Can Forming Properties | Heat Resistance | Resistance to Dents | Flavor Properties-1 | Flavor Properties-2 |
|---|---|---|---|---|---|---|
| 4-3 | good | good | very good | very good | very good | very good |
| 4-4 | good | good | good | moderate | good | very good |
| 4-5 | good | good | very good | very good | very good | very good |
| 4-6 | good | good | very good | very good | very good | very good |
| 4-7 | good | good | very good | very good | very good | very good |
| 4-8 | good | good | very good | very good | very good | very good |
| 4-9 | moderate | good | very good | good | very good | very good |
| 4-10 | very good | good | very good | very good | very good | good |

TABLE 4-4

| Comparative Example No. | Film-forming Properties | Metal Can Forming Properties | Heat Resistance | Resistance to Dents | Flavor Properties-1 | Flavor Properties-2 |
|---|---|---|---|---|---|---|
| 4-1 | moderate | good | very bad | moderate | - | - |
| 4-2 | very bad | good | very bad | very bad | - | - |
| 4-3 | good | moderate | very bad | very bad | - | - |
| 4-4 | moderate | very bad | - | - | - | - |
| 4-5 | moderate | good | moderate | moderate | very good | very good |
| 4-6 | very bad | good | moderate | very bad | very good | very good |
| 4-7 | good | good | moderate | very bad | very good | very good |

(V) Polyester-1

EXAMPLES 5-1 TO 5-4 AND COMPARATIVE EXAMPLE 5-1 TO 5-3

In a stainless steel autoclave were put dimethyl terephthalate and dimethyl isophthalate at a terephthalic acid (TPA)/isophthalic acid (IPA) ratio shown in Table 5-1 below and 703 parts (molar ratio: 2.2) of ethylene glycol per 1000 parts of the total acid component, and 900 ppm, based on the total acid component, of calcium acetate was added as a catalyst for ester interchange to conduct ester interchange at 230°C. After completion of the reaction, antimony trioxide as a catalyst for polymerization and trimethyl phosphate were added thereto in concentrations of 300 ppm and 450 ppm, respectively, based on the polymer. A prescribed amount of a polyfunctional compound was also added. Polycondensation reaction was carried out at 280°C under reduced pressure to obtain polyesters shown in Table 5-1.

The resulting polyester was extrusion laminated on kraft paper having a basis weight of 60 g/$m^2$ by means of the same apparatus as used in the evaluation of laminating extrudability at a speed of 100 m/min to evaluate laminating extrudability. Further, the flavor properties of the polyester was evaluated in accordance with the method of "flavor properties-2" by using an extruded film prepared by means of the same apparatus as used in the evaluation of thin film forming properties. The results of evaluation are shown in Table 5-2 below.

COMPARATIVE EXAMPLE 5-4

An LDPE resin (Petrosen 204, produced by Tosoh Corp.) was evaluated in the same manner as in Examples 5-1 to 5-4, except that the die swell ratio was determined at a temperature of 260°C. The results proved that the resin was satisfactory in high-speed laminating extrusion but poor in flavor properties and therefore unsuitable for food packaging.

TABLE 5-1

| | Acid Component TPA/IPA (mol%) | Polyfunctional Compound (mol%) | IV (dl/g) | Tm (°C) | Die Swell Ratio |
|---|---|---|---|---|---|
| Example 5-1 | 88/12 | pentaerythritol (0.35) | 0.71 | 223 | 1.5 |
| Example 5-2 | 92/8 | pentaerythritol (0.35) | 0.70 | 233 | 1.4 |
| Example 5-3 | 88/12 | trimellitic acid (0.5) | 0.68 | 225 | 1.3 |
| Example 5-4 | 100/0 | pentaerythritol (0.5) | 0.70 | 250 | 1.3 |
| Compara. Example 5-1 | 100/0 | pentaerythritol (0.05) | 0.71 | 252 | 1.0 |
| Compara. Example 5-2 | 88/12 | - | 0.62 | 227 | 1.0 |
| Compara. Example 5-3 | 100/0 | - | 0.65 | 254 | 0.9 |
| Compara. Example 5-4 | LDPE | - | - | 110 | 1.6 |

TABLE 5-2

| | Laminating Extrudability | | Flavor Properties-2 |
|---|---|---|---|
| | Neck-in (mm) | Wavy Edges | |
| Example 5-1 | 65 | very good | good |
| Example 5-2 | 75 | very good | good |
| Example 5-3 | 80 | good | good |
| Example 5-4 | 83 | good | good |
| Comparative Example 5-1 | 125-130 | moderate | very good |
| Comparative Example 5-2 | 130-140 | very bad | very good |
| Comparative Example 5-3 | 130-140 | very bad | very good |
| Comparative Example 5-4 | 70 | very good | very bad |

(VI) Polyester-2

EXAMPLES 6-1, 6-3 TO 6-11 AND COMPARATIVE EXAMPLES 6-1 TO 6-3

In a stainless steel autoclave were put dimethyl terephthalate and dimethyl isophthalic acid at a terephthalic acid (TPA) to isophthalic acid (IPA) ratio shown in Tables 6-1 and 6-2 below and 703 parts (molar ratio: 2.2) of ethylene glycol per 1000 parts of the total acid component. Then, 900 ppm, based on the total acid component, of calcium acetate was added thereto as a catalyst for ester interchange to conduct ester interchange at 230°C. After completion of the reaction, antimony trioxide as a catalyst for polymerization and trimethyl phosphate were added thereto in concentrations of 300 ppm and 450 ppm, respectively, based on the polymer. Prescribed amounts of a monocarboxylic acid or a derivative thereof and/or a monohydric alcohol and a polyfunctional compound were also added. Polycondensation reaction was carried out at 280°C under reduced pressure to obtain polyester shown in Tables 6-1 and 6-2. The resulting polyester was subjected to a heat treatment under prescribed conditions, followed by evaluation in accordance with the above-described methods.

EXAMPLE 6-2

A polyester was prepared in the same manner as in Example 6-1, except that any monocarboxylic acid or a

derivative thereof and any monohydric alcohol were not added. After heat treating the resulting polyester at 130°C for 40 hours, the polyester was evaluated. The results obtained are shown in Tables 6-3 and 6-4. It is seen that addition of a monocarboxylic acid or a derivative thereof and/or a monohydric alcohol and/or heat treatment at 130 to 150°C in vacua or an inert gas atmosphere is effective in reducing BHET and BHET2 thereby suppressing precipitation.

TABLE 6-1

| Polyester No. | Acid Component TPA/IPA (mol%) | Polyfunctional Compound (mol%) | Monocarboxylic Acid Derivative | Monohydric Alcohol | Heat Treating Conditions (Atmosphere) | IV After Heat Treatment (dl/g) |
|---|---|---|---|---|---|---|
| | | | n-Butyl Benzoate | Stearyl Alcohol | | |
| P-1 | 88/12 | pentaerythritol (0.3) | 0.2 mol% | 0.7 mol% | 130°Cx40 hrs (vacuum) | 0.68 |
| P-2 | 88/12 | pentaerythritol (0.3) | - | - | 130°Cx40hrs (vacuum) | 0.69 |
| P-3 | 88/12 | pentaerythritol (0.3) | 1.0 mol% | - | 130°Cx40hrs (vacuum) | 0.72 |
| P-4 | 88/12 | pentaerythritol (0.3) | - | 0.4 mol% | 130°Cx40hrs (vacuum) | 0.71 |
| P-5 | 88/12 | pentaerythritol (0.2) | 0.2 mol% | 0.7 mol% | 120°Cx12hrs (vacuum) | 0.72 |
| P-6 | 88/12 | pentaerythritol (0.2) | 0.2 mol% | 0.7 mol% | 130°Cx40hrs (nitrogen) | 0.72 |
| P-7 | 88/12 | pentaerythritol (0.3) | 0.2 mol% | 0.7 mol% | 150°Cx10hrs (vacuum) | 0.71 |
| P-8 | 88/12 | trimellitic acid (0.5) | 0.2 mol% | 0.7 mol% | 130°Cx40hrs (vacuum) | 0.68 |
| P-9 | 100/0 | pentaerythritol (0.25) | 0.2 mol% | 0.7 mol% | 130°Cx40hrs (vacuum) | 0.70 |

TABLE 6-2

| Polyester No. | Acid Component TPA/IPA (mol%) | Polyfunctional Compound (mol%) | Monocarboxylic Acid Derivative | Monohydric Alcohol | Heat Treating Conditions (Atmosphere) | IV After Heat Treatment (dl/g) |
|---|---|---|---|---|---|---|
| | | | n-Butyl Benzoate | Stearyl Alcohol | | |
| P-10 | 88/12 | pentaerythritol (0.3) | - | - | 120°Cx12hrs (vacuum) | 0.69 |
| p-11 | 88/12 | pentaerythritol (0.3) | 0.02 mol% | - | 120°Cx12hrs (vacuum) | 0.71 |
| P-12 | 88/12 | pentaerythritol (0.3) | 5 mol% | - | 130°Cx40hrs (vacuum) | 0.50 disordered polymerization reaction |
| P-13 | 88/12 | pentaerythritol (0.3) | 0.2 mol% | 0.7 mol% | 170°Cx5hrs (vacuum) | unmeasurable due to gelation (insolubilization) |

(continued)

| Polyester No. | Acid Component TPA/IPA (mol%) | Polyfunctional Compound (mol%) | Monocarboxylic Acid Derivative | Monohydric Alcohol | Heat Treating Conditions (Atmosphere) | IV After Heat Treatment (dl/g) |
|---|---|---|---|---|---|---|
| | | | n-Butyl Benzoate | Stearyl Alcohol | | |
| P-14 | 100/0 | pentaerythritol (0.05) | 0.2 mol% | 0.7 mol% | 130°Cx40hrs (vacuum) | 0.71 |

TABLE 6-3

| Example No. | Polyester No. | Content (ppm) | | Die Swell Ratio | Laminating Extrudability | | Precipitation in Retort Treatment |
|---|---|---|---|---|---|---|---|
| | | BHET | BHET2 | | Neck-in (mm) | Wavy Edges | |
| 6-1 | P-1 | 50 | 240 | 1.4 | 78 | very good | good |
| 6-2 | P-2 | 58 | 290 | 1.4 | 76 | very good | good |
| 6-3 | P-3 | 51 | 235 | 1.4 | 76 | very good | good |
| 6-4 | P-4 | 52 | 210 | 1.4 | 76 | very good | good |
| 6-5 | P-5 | 42 | 160 | 1.4 | 76 | very good | good |
| 6-6 | P-6 | 25 | 110 | 1.4 | 72 | very good | good |
| 6-7 | P-7 | 40 | 230 | 1.4 | 68 | very good | good |
| 6-8 | P-8 | 47 | 245 | 1.3 | 85 | good | good |
| 6-9 | P-9 | 57 | 270 | 1.3 | 86 | good | good |
| 6-10 | P-10 | 130 | 480 | 1.4 | 76 | very good | moderate |
| 6-11 | p-11 | 59 | 280 | 1.4 | 76 | very good | good |

TABLE 6-4

| Compara. Example No. | Polyester No. | Content (ppm) | | Die Swell Ratio | Laminating Extrudability | | Precipitation in Retort Treatment |
|---|---|---|---|---|---|---|---|
| | | BHET | BHET2 | | Neck-in (mm) | Wavy Edges | |
| 6-1 | P-12 | 50 | 205 | 1.1 | 117-125 | very bad | good |
| 6-2 | P-13 | 45 | 190 | - | - | - | - |
| 6-3 | P-14 | 54 | 271 | 1.0 | 120-130 | very bad | good |

(VII) Polyester-3

<u>EXAMPLES 7-1 TO 7-10 AND COMPARATIVE EXAMPLE 7-1</u>

In a stainless steel-made esterification reactor were put 880 parts of terephthalic acid, 120 parts of isophthalic acid, and 448 parts of ethylene glycol. The inner pressure was raised to 1.7 kg/cm$^2$G at 255°C, followed by pressure relief, and esterification was carried out at 250°C while introducing nitrogen at 0.5 kg/cm$^2$G. After evaporation of water ended to complete the reaction, the reaction mixture was transferred to a polymerization reactor. Germanium dioxide

and trimethyl phosphate were added thereto in a concentration of 100 ppm and 180 ppm, respectively, based on the polymer, and a polyfunctional compound was also added. Polycondensation was conducted at 280°C under reduced pressure to obtain a polyester shown in Table 7-1 below.

Water treatment:

The polyester chips (2 kg) was put in a stainless steel vessel, and 5 1 of pure water was added. The vessel was sealed and treated at 95°C for 5 hours (condition A) or at 110°C for 1 hour (condition B).

Heat treatment:

The water-treated chips were dried in vacua at 120°C for 12 hours and heated at 175°C for 24 hours in vacua to obtain a polyester (P-15 to P-17 and P-19 to P-22). P-18 and P-23 were obtained in the same manner as described above, except the heat treatment was not conducted for P-18 and the water treatment was not conducted for P-23.

Extrusion blow molding:

The resulting polyester was dried to a water content of 50 ppm or smaller, fed to an extrusion blow molding machine (JEB-3, manufactured by The Japan Steel Works, Ltd.; screw diameter: 40 mm; L/D = 25), and extruded through a circular die at 260°C to form a tubular parison. While the parison was softened, a blow mold was closed to pinch off the parison and to form the bottom. The closed end parison was inflated to obtain a 500 cc-volume bottle. The results of evaluation of the polyester and the blown bottle are shown in Table 7-2 below.

Laminating extrusion:

The dried polyester was fed to an extruder and extrusion laminated on an aluminum plate through a T-die at an extrusion temperature of 260°C to obtain a polyester/metal laminate. The results of evaluation of the laminate are shown in Table 7-2.

Blown-film extrusion:

The dried polyester was fed to a blown-film extruder, extruded through a circular die (diameter: 50 mm) at an extrusion temperature of 250°C, inflated, and taken up at a speed of 18 m/min to obtain a blown film having a thickness of 40 $\mu$m. The results of evaluation of the blown film are shown in Table 7-3 below.

As shown in Tables 7-2 and 7-3, when the polyester is first subjected to a water treatment and then to a heat treatment, BHET and BHET2 contents of a polyester containing a polyfunctional compound can be reduced without impairing the molding properties.

TABLE 7-1

| Polyester No. | Acid Component TPA/IPA (mol%) | Polyfunctional Compound (mol%) | Water Treatment Condition | IV (dl/g) | |
|---|---|---|---|---|---|
| | | | | Before Heat Treatment | After Heat Treatment (Y) |
| P-15 | 88/12 | pentaerythritol (0.35) | A | 0.71 | 0.79 (+0.08) |
| P-16 | 88/12 | pentaerythritol (0.25) | A | 0.73 | 0.78 (+0.05) |
| P-17 | 88/12 | trimellitic acid (0.80) | A | 0.70 | 0.78 (+0.08) |
| P-18 | 88/12 | pentaerythritol (0.35) | A | 0.71 | - |
| P-19 | 88/12 | - | A | 0.70 | 0.75 (+0.05) |

(continued)

| Polyester No. | Acid Component TPA/IPA (mol%) | Polyfunctional Compound (mol%) | Water Treatment Condition | IV (dl/g) | |
|---|---|---|---|---|---|
| | | | | Before Heat Treatment | After Heat Treatment (Y) |
| P-20 | 88/12 | pentaerythritol (0.35) | B | 0.71 | 0.76 (+0.05) |
| P-21 | 88/12 | pentaerythritol (0.20) | B | 0.72 | 0.74 (+0.02) |
| P-22 | 88/12 | trimellitic acid (0.80) | B | 0.70 | 0.75 (+0.05) |
| P-23 | 88/12 | pentaerythritol (0.20) | - | 0.70 | 0.86 (+0.16) |

A: 95°C x 5 hours water treatment
B: 110°C x 1 hour water treatment
Y: An increase in IV

TABLE 7-2

| Example No. | Polyester | Content (ppm) | | Die Swell Ratio | Extrusion Blow Molding Properties | Laminating Extrudability | Flavor Properties-3 |
|---|---|---|---|---|---|---|---|
| | | BHET | BHET2 | | | | |
| 7-1 | P-15 | 46 | 220 | 1.7 | good | very good | very good |
| 7-2 | P-16 | 23 | 115 | 1.5 | good | very good | very good |
| 7-3 | P-17 | 45 | 200 | 1.5 | good | very good | very good |
| 7-4 | P-18 | 190 | 700 | 1.5 | good | very good | very good |
| 7-5 | P-20 | 50 | 250 | 1.6 | good | very good | very good |
| 7-6 | P-21 | 22 | 95 | 1.4 | good | very good | very good |
| 7-7 | P-22 | 40 | 170 | 1.5 | good | very good | very good |

TABLE 7-3

| | Polyester | Content (ppm) | | Die Swell Ratio | Blown-film Extrusion Properties | Flavor Properties -2 | Precipitation After Retort Treatment |
|---|---|---|---|---|---|---|---|
| | | BHET | BHET2 | | | | |
| Example 7-8 | P-15 | 46 | 220 | 1.7 | good | very good | good |
| Example 7-9 | P-18 | 190 | 700 | 1.5 | good | good | moderate |
| Example 7-10 | P-23 | 20 | 85 | 1.6 | good | very good | good |
| Comparative Example 7-1 | P-19 | 32 | 135 | 1.0 | very bad | very good | good |

(VIII) Polyester resin composition comprising polyester with reduced low-molecular weight compounds

(1) Coating by extrusion lamination

EXAMPLES 8-1 TO 8-4

A polyester resin composition was prepared and evaluated in the same manner as in Example 3-2, except for replacing the polyester-A used in Example 3-2 with the polyester shown in Table 8-1 below. The results are shown in Table 8-1. As can be seen, all the polyester resin compositions for coating metal exhibited excellent performance in all the tests.

TABLE 8-1

| Example No. | Polyester/ Copolyester -B | Polyester (wt%) | IV (dl/g) | Laminating Extrudability | | Metal Can Forming Properties | Heat Resistance | Resistance to Dents | Flavor Properties-3 |
|---|---|---|---|---|---|---|---|---|---|
| | | | | Neck-in (mm) | Wavy Edges | | | | |
| 8-1 | P-5/B-3 | 50 | 1.08 | 93 | very good | good | very good | very good | very good |
| 8-2 | P-17/B-3 | 50 | 1.11 | 82 | very good | good | very good | very good | very good |
| 8-3 | P-20/B-3 | 50 | 1.09 | 80 | very good | good | very good | very good | very good |
| 8-4 | P-21/B-3 | 50 | 1.08 | 88 | very good | good | very good | very good | very good |

(2) Coating with polyester composite film

EXAMPLES 8-5 TO 8-8

A polyester composite film was prepared and evaluated in the same manner as in Example 4-1, except for replacing the polyester used in Example 4-1 as a base layer with the polyester shown in Table 8-2. As shown in Table 8-2, all the polyester resin composit films for coating metal exhibited excellent performance in all the tests.

TABLE 8-2

| Example No. | Base Layer | | | Film Forming Properties | Metal Can Forming Properties | Heat Resistance | Resistance to Dents | Flavor Properties -2 |
|---|---|---|---|---|---|---|---|---|
| | Polyester | Tm (°C) | IV (dl/g) | | | | | |
| 8-5 | P-5 | 225 | 0.72 | very good | good | very good | very good | very good |
| 8-6 | P-17 | 225 | 0.78 | very good | good | very good | very good | very good |
| 8-7 | P-20 | 225 | 0.76 | very good | good | very good | very good | very good |
| 8-8 | P-21 | 225 | 0.74 | very good | good | very good | very good | very good |

(3) Extrusion blow molding and blown-film extrusion

EXAMPLES 8-9 TO 8-12

A polyester resin composition was prepared in the same manner as in Example 3-2, except for replacing the polyester-A used in Example 3-2 with the polyester shown in Table 8-3 below. The extrusion blow molding properties and blown-film extrusion properties of the resulting resin composition were evaluated. As shown in Table 8-3, blown bottles and blown films having satisfactory properties were obtained.

TABLE 8-3

| Example No. | Polyester/ Copolyester -B | Polyester (wt%) | IV (dl/g) | Extrusion Blow Molding Properties | Flavor Properties -3 | Blown-film Extrusion Properties | Precipitation after Retort Treatment |
|---|---|---|---|---|---|---|---|
| 8-9 | P-5/B-3 | 50 | 1.08 | good | very good | good | good |
| 8-10 | P-17/B-3 | 50 | 1.11 | good | very good | good | good |
| 8-11 | P-20/B-3 | 50 | 1.09 | good | very good | good | good |
| 8-12 | P-21/B-3 | 50 | 1.08 | good | very good | good | good |

The polyester resin composition according to the present invention exhibits excellent properties in high-speed extrusion lamination onto a metal plate to show excellent performance in all the requirements for adhesion to metal, draw moldability in deep drawing, impact resistance, resistance to dents after a thermal history, and flavor properties. In particular, the resin composition can have reduced contents of monomers and oligomers, such as free terephthalic acid, BHET and BHET2, that may have adverse influences on the taste so that it is particularly suited as a coating material for metal cans of beer or soft drinks.

Brief Description of the Drawings:

Fig. 1 is a graph showing the relationship between the compounding ratio of a composition comprising A-13 (polyester-A containing a polyfunctional compound) and B-12 (copolyester-B having an adipic acid comonomer unit) and the die swell ratio.

Fig. 2 is a graph showing the relationship between the compounding ratio of a composition comprising A-17 (polyester containing no polyfunctional compound) and B-12 (copolyester-B having an adipic acid comonomer unit) and the die swell ratio.

Fig. 3 is a graph showing the relationship between the compounding ratio of a composition comprising A-13 (polyester-A containing a polyfunctional compound) and B-14 (polyester having no adipic acid comonomer unit) and the die swell ratio.

Fig. 4 is an electron micrograph of the cross section of an unstretched film comprising 50% by weight of A-13 (polyester-A containing a polyfunctional compound) and 50% by weight of B-12 (copolyester-B having an adipic acid comonomer unit) cut in parallel to the machine direction (MD), in which the black phase is polyester-A, and the white phase is copolyester-B.

## Claims

**1.** A polyester resin composition comprising:

30 to 90% by weight of a polyester-A comprising ethylene terephthalate as a main component, wherein said polyester-A has a melting point of not lower than 220°C and contains 0.1 to 2.0 mol% of a compound having 3 or 4 ester bond-forming functional groups per a molecule thereof;

10 to 70% by weight of a copolyester-B comprising butylene terephthalate as a main component, wherein said copolyester-B has a melting point of 150 to 210°C and a glass transition temperature of not higher than 20°C; and a hindered phenol organic compound and/or tocopherol.

**2.** A polyester resin composition as described in claim 1, which has a free terephthalic acid content of not more than 20 ppm by weight.

**3.** A polyester resin composition as described in claim 1 or 2, which contains not more than 60 ppm by weight of bishydroxyethyl terephthalate and not more than 300 ppm by weight of a dimer of bishydroxyethyl terephthalate.

**4.** A polyester resin composition as described in claims 1 to 3, wherein said polyester-A contains a monocarboxylic acid or a derivative thereof and/or a monohydric alcohol.

**5.** A polyester resin composition as described in any one of claims 1 to 4, which has a melt viscosity of not higher than 600 Pa·s (6000 poise) and a melt tension of not lower than 0.3 g as measured at a temperature of (the melting point of said polyester-A + 25°C).

**6.** A polyester resin composition as described in any one of claims 1 to 5, which has a die swell ratio of not less than 1.3 as measured at a temperature of (the melting point of said polyester-A + 40°C), said die swell ratio being represented by the following formula:

$$S_D = D_P/D_C$$

wherein $S_D$ is a die swell ratio; D, is a diameter of a polymer extruded from a capillary at a shear rate of 121.6 $sec^{-1}$; and $D_c$ is a diameter of the capillary.

**7.** A method for preparing a polyester resin composition according to any of the claims 1 to 6 which comprises the steps of:

(i) reducing bishydroxyethyl terephthalate and a dimer thereof in said polyester-A, which comprises heating said polyester-A at a temperature of 130 to 150°C for at least 5 hours in a vacuum or an inert gas atmosphere
(ii) mixing 30 to 90 % by weight of said polyester-A, 10 to 70 % by weight of said copolyester-B, and a hindered phenol organic compound and/or tocopherol.

**8.** A method for preparing a polyester resin composition according to any of the claims 1 to 6 which comprises the steps of:

(i) reducing bishydroxyethyl terephthalate and a dimer thereof in said polyester-A, which comprises contacting said polyester-A with water or a steam-containing gas at 70 to 150°C for 5 minutes to 50 hours and then heating below the melting point of said polyester-A in a vacuum or an inert gas atmosphere
(ii) mixing 30 to 90 % by weight of said polyester-A, 10 to 70 % by weight of said copolyester-B, and a hindered phenol organic compound and/or tocopherol.

**9.** A method for preparing a polyester resin composition according to any of the claims 1 to 6 which comprises the steps of:

(i) reducing a free terephthalic acid content in said copolyester-B, which comprises heating said copolyester-B at a temperature of 130 to 190°C for at least 1 hour in a vacuum or an inert gas atmosphere
(ii) mixing 30 to 90 % by weight of said polyester-A, 10 to 70 % by weight of said copolyester-B, and a hindered phenol organic compound and/or tocopherol.

**10.** A polyester composite film comprising:

i) an adhesive layer comprising a polyester resin composition, wherein said polyester resin composition comprises:

30 to 90% by weight of polyester-A comprising ethylene terephthalate as a main component, wherein polyester-A has a melting point of not lower than 220°C and contains 0.1 to 2.0 mol% of a compound having 3 or 4 ester bond-forming functional groups per a molecule thereof;
10 to 70% by weight of copolyester-B comprising butylene terephthalate as a main component, wherein copolyester-B has a melting point of 150 to 210°C and a glass transition temperature of not higher than 20°C; and
a hindered phenol organic compound and/or tocopherol; and

ii) a base layer comprising a polyester, said polyester comprising ethylene terephthalate as a main component.

**11.** A polyester composite film as described in claim 10, wherein said polyester of said base layer contains not more than 60 ppm by weight of bishydroxyethyl terephthalate and not more than 300 ppm by weight of a dimer of bishydroxyethyl terephthalate.

**12.** A polyester composite film as described in claim 10 or 11, wherein said polyester of said base layer is a polyester comprising ethylene terephthalate as a main component, having a melting point of not lower than 220°C, and containing 0.1 to 2.0 mol% of a compound having 3 or 4 ester bond-forming functional groups per a molecule thereof.

**13.** A polyester composite film as described in any one of claims 10 to 12, wherein said polyester of said base layer and/or said polyester-A of said adhesive layer contains a monocarboxylic acid or a derivative thereof and/or a monohydric alcohol.

**14.** A polyester composite film as described in any one of claims 10 to 13, wherein said polyester resin composition of said adhesive layer has a melt viscosity of not higher than 600 Pa·s (6000 poise) and a melt tension of not lower than 0.3 g as measured at a temperature of (the melting point of said polyester-A + 25°C).

**15.** A polyester composite film as described in any one of claims 10 to 14, wherein said polyester resin composition of said adhesive layer has a die swell ratio of not less than 1.3 as measured at a temperature of (the melting point of said polyester-A + 40°C), said die swell ratio being represented by the following formula:

$$S_D = D_P/D_C$$

wherein $S_D$ is a die swell ratio; $D_p$ is a diameter of a polymer extruded from a capillary at a shear rate of 121.6 $sec^{-1}$; and $D_c$ is a diameter of the capillary.

**16.** A polyester/metal laminate comprising a metal plate having laminated on at least one side thereof a polyester composite film described in any one of claims 10 to 15.

**17.** A film comprising a polyester resin composition described in any one of claims 1 to 6.

**Patentansprüche**

**1.** Eine Polyesterharzzusammensetzung umfassend:

30 bis 90 Gewichts-% eines Polyesters-A, welcher Ethylenterephthalat als Hauptbestandteil umfasst, wobei der Polyester-A einen Schmelzpunkt von nicht weniger als 220°C aufweist und 0,1 bis 2,0 mol-% einer Verbindung mit 3 oder 4 Esterbindung-bildenden funktionellen Gruppen pro Molekül davon enthält;
10 bis 70 Gewichts-% eines Copolyesters-B, welcher Butylenterephthalat als Hauptbestandteil umfasst, wobei der Copolyester-B einen Schmelzpunkt von 150 bis 210°C und eine Glasübergangstemperatur von nicht mehr als 20°C aufweist; und
eine gehinderte organische Phenolverbindung und/oder Tocopherol.

**2.** Eine Polyesterharzzusammensetzung wie in Anspruch 1 beschrieben, welche einen Gehalt an freier Terephthalsäure von nicht mehr als 20 Gewichts-ppm aufweist.

**3.** Eine Polyesterharzzusammensetzung wie in Anspruch 1 oder 2 beschrieben, welche nicht mehr als 60 Gewichts-ppm Bishydroxyethylterephthalat und nicht mehr als 300 Gewichts-ppm eines Dimers von Bishydroxyethylterephthalat enthält.

**4.** Eine Polyesterharzzusammensetzung wie in einem der Ansprüche 1 bis 3 beschrieben, wobei der Polyester-A eine Monocarbonsäure oder ein Derivat davon und/oder einen einwertigen Alkohol enthält.

**5.** Eine Polyesterharzzusammensetzung wie in einem der Ansprüche 1 bis 4 beschrieben, welche eine Schmelzviskosität von nicht mehr als 600 Pa·s (6000 Poise) und eine Schmelzspannung von nicht weniger als 0,3 g aufweist, gemessen bei einer Temperatur (der Schmelzpunkt des Polyesters-A + 25°C).

**6.** Eine Polyesterharzzusammensetzung wie in einem der Ansprüche 1 bis 5 beschrieben, welche ein Düsenaufweitungsverhältnis von nicht weniger als 1,3, gemessen bei einer Temperatur (der Schmelzpunkt des Polyesters-A + 40°C), aufweist, wobei das Düsenaufweitungsverhältnis durch folgende Formel wiedergegeben wird:

$$S_D = D_F/D_C$$

wobei $S_D$ ein Düsenaufweitungsverhältnis ist; $D_F$ ein Durchmesser eines Polymers, welches mit einer Scherrate von 121,6 $sec^{-1}$ aus einer Kapillare extrudiert wurde, ist; und $D_C$ ein Durchmesser der Kapillare ist.

**7.** Ein Verfahren zur Herstellung einer Polyesterharzzusammensetzung nach einem der Ansprüche 1 bis 6, welches die Schritte umfasst:

(i) Reduzieren von Bishydroxyethylterephthalat und einem Dimer davon in dem Polyester-A, welches Erwärmen des Polyesters-A auf eine Temperatur von 130 bis 150°C für mindestens 5 Stunden unter Vakuum oder Inertgasatmosphäre umfasst
(ii) Mischen von 30 bis 90 Gewichts-% des Polyesters-A, 10 bis 70 Gewichts-% des Copolyesters-B und einer gehinderten organischen Phenolverbindung und/oder Tocopherol.

**8.** Ein Verfahren zur Herstellung einer Polyesterharzzusammensetzung nach einem der Ansprüche 1 bis 6, welches die Schritte umfasst:

(i) Reduzieren von Bishydroxyethylterephthalat und einem Dimer davon in dem Polyester-A, welches in Kontakt bringen des Polyesters-A mit Wasser oder einem Dampf enthaltenden Gas bei 70 bis 150°C für 5 Minuten bis 50 Stunden und anschließendes Erhitzen unterhalb des Schmelzpunktes des Polyesters-A unter Vakuum oder Inertgasatmosphäre umfasst
(ii) Mischen von 30 bis 90 Gewichts-% des Polyesters-A, 10 bis 70 Gewichts-% des Copolyesters-B und einer gehinderten organischen Phenolverbindung und/oder Tocopherol.

**9.** Ein Verfahren zur Herstellung einer Polyesterharzzusammensetzung nach einem der Ansprüche 1 bis 6, welches die Schritte umfasst:

(i) Reduzieren des freien Terephthalsäuregehalts in dem Copolyester-B, welches Erwärmen des Copolyesters-B auf eine Temperatur von 130 bis 190°C für mindestens 1 Stunde unter Vakuum oder Inertgasatmosphäre umfasst
(ii) Mischen von 30 bis 90 Gewichts-% des Polyesters-A, 10 bis 70 Gewichts-% des Copolyesters-B und einer gehinderten organischen Phenolverbindung und/oder Tocopherol.

**10.** Eine Polyesterverbundfolie umfassend:

(i) eine Klebstoffschicht, welche eine Polyesterharzzusammensetzung umfasst, wobei die Polyesterharzzusammensetzung umfasst:

30 bis 90 Gewichts-% eines Polyesters-A, welcher Ethylenterephthalat als Hauptbestandteil umfasst, wobei der Polyester-A einen Schmelzpunkt von nicht weniger als 220°C aufweist und 0,1 bis 2,0 mol-% einer Verbindung mit 3 oder 4 Esterbindungen-bildenden funktionellen Gruppen pro Molekül davon enthält;
10 bis 70 Gewichts-% eines Copolyesters-B, welcher Butylenterephthalat als Hauptbestandteil umfasst, wobei der Copolyester-B einen Schmelzpunkt von 150 bis 210°C und eine Glasübergangstemperatur von nicht mehr als 20°C aufweist; und eine gehinderte organische Phenolverbindung und/oder Tocopherol; und

(ii) eine Grundschicht, welche einen Polyester umfasst, wobei der Polyester Ethylenterephthalat als Hauptbestandteil umfasst.

**11.** Eine Polyesterverbundfolie wie in Anspruch 10 beschrieben, wobei der Polyester der Grundschicht nicht mehr als 60 Gewichts-ppm Bishydroxyethylterephthalat und nicht mehr als 300 Gewichts-ppm eines Dimers von Bishydroxyethylterephthalat enthält.

**12.** Eine Polyesterverbundfolie wie in Anspruch 10 oder 11 beschrieben, wobei der Polyester der Grundschicht ein Polyester ist, welcher Ethylenterephthalat als Hauptbestandteil umfasst, einen Schmelzpunk von nicht weniger als 220°C aufweist und 0,1 bis 2,0 Mol-% einer Verbindung mit 3 oder 4 Esterbindungs-bildenden funktionellen Gruppen pro Molekül davon enthält.

**13.** Eine Polyesterverbundfolie wie in einem der Ansprüche 10 bis 12 beschrieben, wobei der Polyester der Grundschicht und/oder der Polyester-A der Klebstoffschicht eine Monocarbonsäure oder ein Derivat davon und/oder einen einwertigen Alkohol enthalten.

**14.** Eine Polyesterverbundfolie wie in einem der Ansprüche 10 bis 13 beschrieben, wobei die Polyesterharzzusammensetzung der Klebstoffschicht eine Schmelzviskosität von nicht mehr als 600 Pa·s (6000 Poise) und eine Schmelzspannung von nicht weniger als 0,3 g aufweist, gemessen bei einer Temperatur (der Schmelzpunkt des Polyesters-A + 25°C).

**15.** Eine Polyesterverbundfolie wie in einem der Ansprüche 10 bis 14 beschrieben, wobei die Polyesterharzzusammensetzung der Klebstoffschicht ein Düsenaufweitungsverhältnis von nicht weniger als 1,3, gemessen bei einer Temperatur (der Schmelzpunkt des Polyesters-A + 40°C) aufweist, wobei das Düsenaufweitungsverhältnis durch folgende Formel wiedergegeben wird:

$$S_D = D_F/D_C$$

wobei $S_D$ ein Düsenaufweitungsverhältnis ist; $D_F$ ein Durchmesser eines Polymers, welches mit einer Scherrate von 121,6 $sec^{-1}$ aus einer Kapillare extrudiert wurde, ist; und $D_C$ ein Durchmesser der Kapillare ist.

**16.** Ein Polyester/Metall-Laminat, welches ein Metallblech umfasst, das auf mindestens einer Seite davon mit einer der in einem der Ansprüche 10 bis 15 beschriebenen Polyesterverbundfolien laminiert ist.

**17.** Eine Folie, welche eine der in einem der Ansprüche 1 bis 6 beschriebenen Polyesterharzzusammensetzung umfasst.

## Revendications

1. Composition de résine de polyester comprenant :

   30 à 90 % en poids d'un polyester A comprenant de l'éthylène téréphtalate comme composant principal, où ledit polyester A a un point de fusion non inférieur à 220°C et contient 0,1 à 2,0 mol % d'un composé ayant trois ou quatre groupes fonctionnels formant des liaisons esters par molécule;
   10 à 70 % en poids d'un copolyester B comprenant du butylène téréphtalate comme composant principal, où ledit copolyester B a un point de fusion de 150 à 210°C et une température de transition vitreuse non supérieure à 20°C ; et
   un composé organique phénolique à empêchement stérique et/ou du tocophérol.

2. Composition de résine de polyester telle que décrite dans la revendication 1 qui a une teneur en acide téréphtalique libre non supérieure à 20 ppm en poids.

3. Composition de résine de polyester telle que décrite dans la revendication 1 ou 2 qui ne contient pas plus de 60 ppm en poids de bishydroxyéthyle téréphtalate et pas plus de 300 ppm en poids d'un dimère de bishydroxyéthyle téréphtalate.

4. Composition de résine de polyester telle que décrite dans les revendications 1 à 3, où ledit polyester A contient un acide monocarboxylique ou un dérivé de celui-ci et/ou un alcool monohydroxylé.

5. Composition de résine de polyester telle que décrite dans l'une quelconque des revendications 1 à 4 qui a une viscosité à l'état fondu non supérieure à 600 Pa.s (6 000 poises) et une tension à l'état fondu non inférieure à 0,3 g telle que mesurée à une température de (le point de fusion dudit polyester A + 25°C).

6. Composition de résine de polyester telle que décrite dans l'une quelconque des revendications 1 à 5 qui a un taux de gonflement en filière non inférieur à 1,3 tel que mesuré à une température de (le point de fusion dudit polyester A + 40°C), ledit taux de gonflement en filière étant représenté par la formule suivante :

   $$S_D = D_F/D_C$$

   où $S_D$ est un taux de gonflement en filière ; $D_F$ est un diamètre d'un polymère extrudé depuis un capillaire à une vitesse de cisaillement de 121,6 $s^{-1}$ ; et $D_C$ est un diamètre du capillaire.

7. Procédé pour préparer une composition de résine de polyester selon l'une quelconque des revendications 1 à 6 qui comprend les étapes de :

   (i) réduire le bishydroxyéthyle téréphtalate et un dimère de celui-ci dans ledit polyester A, qui comprend le chauffage dudit polyester A à une température de 130 à 150°C pendant au moins 5 h dans un vide ou une atmosphère de gaz inerte
   (ii) mélanger 30 à 90 % en poids dudit polyester A, 10 à 70 % en poids dudit copolyester B et un composé organique phénolique à empêchement stérique et/ou du tocophérol.

8. Procédé pour préparer une composition de résine de polyester selon l'une quelconque des revendications 1 à 6 qui comprend les étapes de :

   (i) réduire le bishydroxyéthyle téréphtalate et un dimère de celui-ci dans ledit polyester A, qui comprend la mise en contact dudit polyester A avec de l'eau ou un gaz contenant de la vapeur à 70 à 150°C pendant 5 minutes à 50 heures puis le chauffage en dessous du point de fusion dudit polyester A dans un vide ou une atmosphère de gaz inerte
   (ii) mélanger 30 à 90 % en poids dudit polyester A, 10 à 70 % en poids dudit copolyester B et un composé organique phénolique à empêchement stérique et/ou du tocophérol.

9. Procédé pour préparer une composition de résine de polyester selon l'une quelconque des revendications 1 à 6 qui comprend les étapes de :

(i) réduire une teneur en acide téréphtalique libre dudit copolyester B, qui comprend le chauffage dudit copolyester B à une température de 130 à 190°C pendant au moins une heure dans un vide ou une atmosphère de gaz inerte
(ii) mélanger 30 à 90 % en poids dudit polyester A, 10 à 70 % en poids dudit copolyester B et un composé organique phénolique à empêchement stérique et/ou du tocophérol.

**10.** Film composite en polyester comprenant :

(i) une couche adhésive comprenant une composition de résine de polyester, où ladite composition de résine de polyester comprend :

30 à 90 % en poids d'un polyester A comprenant de l'éthylène téréphtalate comme composant principal, où ledit polyester A a un point de fusion non inférieur à 220°C et contient 0,1 à 2,0 mol % d'un composé ayant trois ou quatre groupes fonctionnels formant des liaisons esters par molécule ;
10 à 70 % en poids d'un copolyester B comprenant du butylène téréphtalate comme composant principal, où ledit copolyester B a un point de fusion de 150 à 210°C et une température de transition vitreuse non supérieure à 20°C ; et un composé organique phénolique à empêchement stérique et/ou du tocophérol ; et

(ii) une couche de base comprenant un polyester, ledit polyester comprenant de l'éthylène téréphtalate comme composant principal.

**11.** Film composite en polyester tel que décrit dans la revendication 10, où ledit polyester de ladite couche de base ne contient pas plus de 60 ppm en poids de bishydroxyéthyle téréphtalate et pas plus de 300 ppm en poids d'un dimère de bishydroxyéthyle téréphtalate.

**12.** Film composite en polyester tel que décrit dans la revendication 10 ou 11, où ledit polyester de ladite couche de base est un polyester comprenant de l'éthylène téréphtalate comme composant principal, ayant un point de fusion non inférieur à 220°C, et contenant 0,1 à 2,0 mol % d'un composé ayant 3 ou 4 groupes fonctionnels formant des liaisons esters par molécule.

**13.** Film composite en polyester tel que décrit dans l'une quelconque des revendications 10 à 12, où ledit polyester de ladite couche de base et/ou ledit polyester A de ladite couche adhésive contient un acide monocarboxylique ou un dérivé de celui-ci et/ou un alcool monohydroxylé.

**14.** Film composite en polyester tel que décrit dans l'une quelconque des revendications 10 à 13, où ladite composition de résine de polyester de ladite couche adhésive a une viscosité à l'état fondu non supérieure à 600 Pa.s (6 000 poises) et une tension à l'état fondu non inférieure à 0,3 g telle que mesurée à une température de (le point de fusion dudit polyester A + 25°C).

**15.** Film composite en polyester tel que décrit dans l'une quelconque des revendications 10 à 14, où ladite composition de résine de polyester de ladite couche adhésive a un taux de gonflement en filière non inférieur à 1,3 tel que mesuré à une température de (le point de fusion dudit polyester A + 40°C), ledit taux de gonflement en filière étant représenté par la formule suivante :

$$S_D = D_F/D_C$$

où $S_D$ est un taux de gonflement en filière ; $D_F$ est un diamètre d'un polymère extrudé depuis un capillaire à une vitesse de cisaillement de 121,6 $s^{-1}$; et $D_C$ est un diamètre du capillaire.

**16.** Stratifié polyester/métal comprenant une plaque métallique sur au moins un côté de laquelle est stratifié un film composite en polyester décrit dans l'une quelconque des revendications 10 à 15.

**17.** Film comprenant une composition de résine de polyester décrite dans l'une quelconque des revendications 1 à 6.

FIG. 1

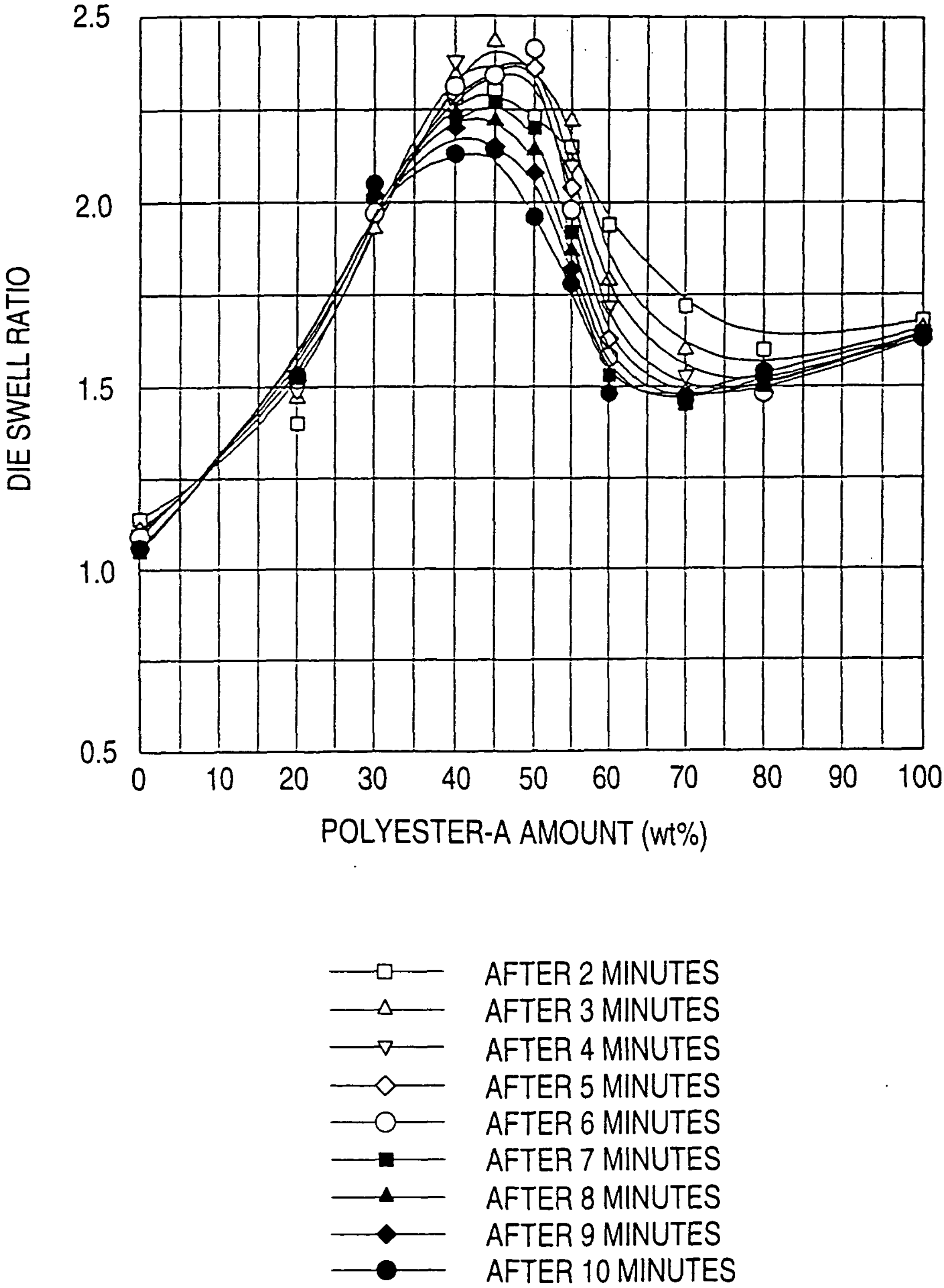
2.5
2.0
1.5
1.0
0.5
DIE SWELL RATIO
0
10
20
30
40
50
60
70
80
90
100
POLYESTER-A AMOUNT (wt%)
AFTER 2 MINUTES
AFTER 3 MINUTES
AFTER 4 MINUTES
AFTER 5 MINUTES
AFTER 6 MINUTES
AFTER 7 MINUTES
AFTER 8 MINUTES
AFTER 9 MINUTES
AFTER 10 MINUTES

FIG. 2

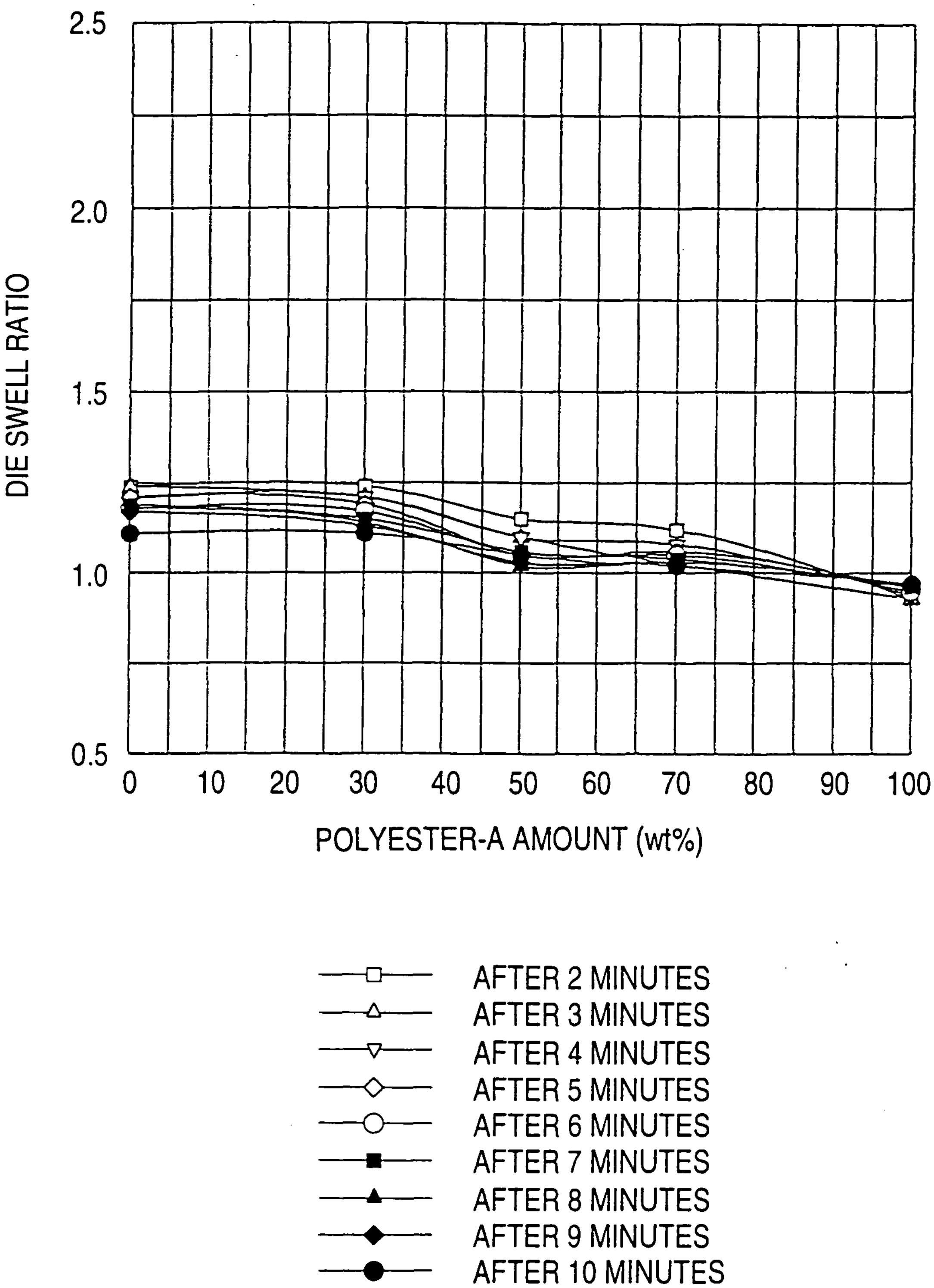
2.5
2.0
1.5
1.0
0.5
DIE SWELL RATIO
0
10
20
30
40
50
60
70
80
90
100
POLYESTER-A AMOUNT (wt%)
AFTER 2 MINUTES
AFTER 3 MINUTES
AFTER 4 MINUTES
AFTER 5 MINUTES
AFTER 6 MINUTES
AFTER 7 MINUTES
AFTER 8 MINUTES
AFTER 9 MINUTES
AFTER 10 MINUTES

FIG. 3

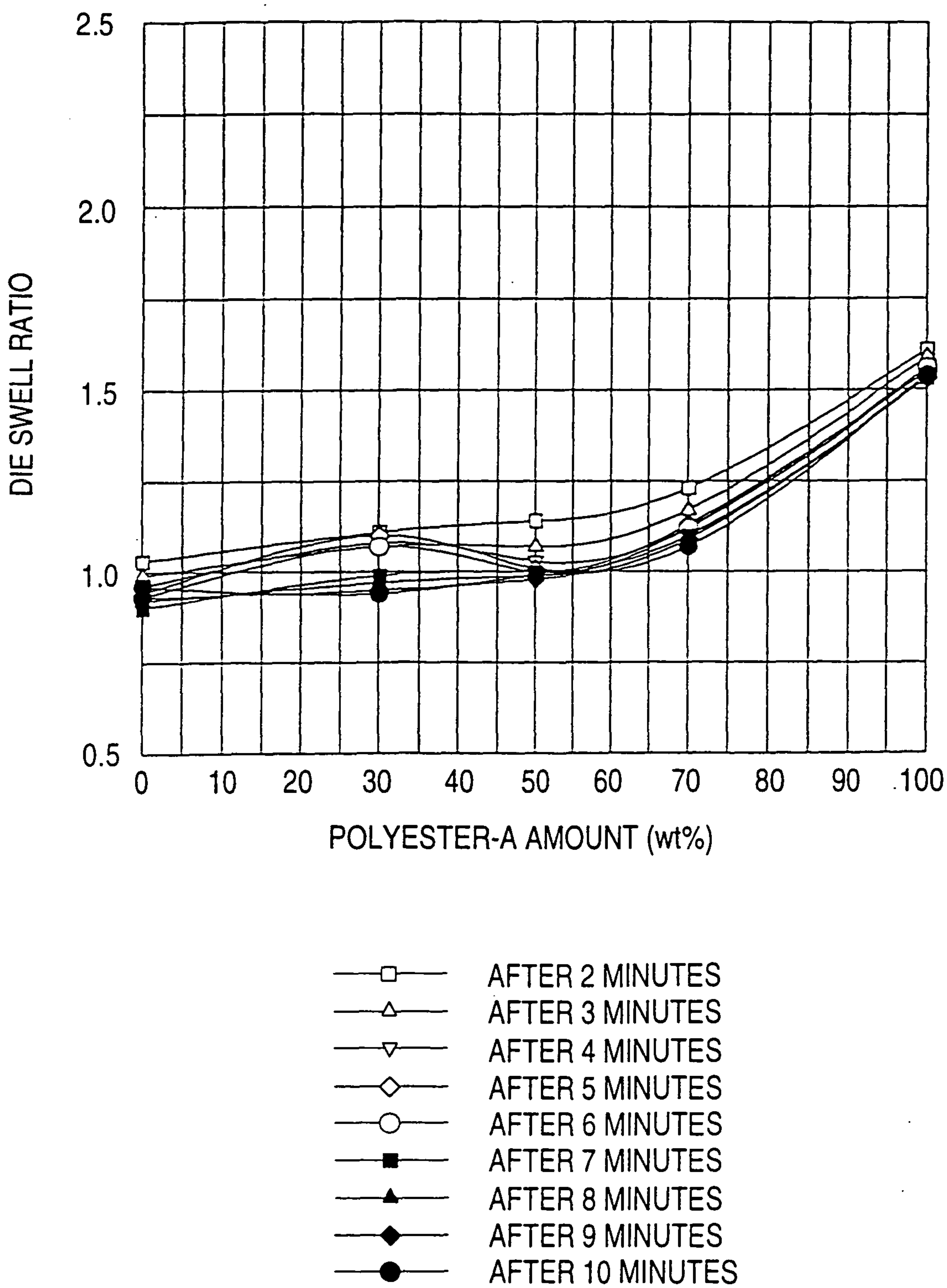
2.5
2.0
1.5
1.0
0.5
DIE SWELL RATIO
0
10
20
30
40
50
60
70
80
90
100
POLYESTER-A AMOUNT (wt%)
AFTER 2 MINUTES
AFTER 3 MINUTES
AFTER 4 MINUTES
AFTER 5 MINUTES
AFTER 6 MINUTES
AFTER 7 MINUTES
AFTER 8 MINUTES
AFTER 9 MINUTES
AFTER 10 MINUTES

FIG. 4

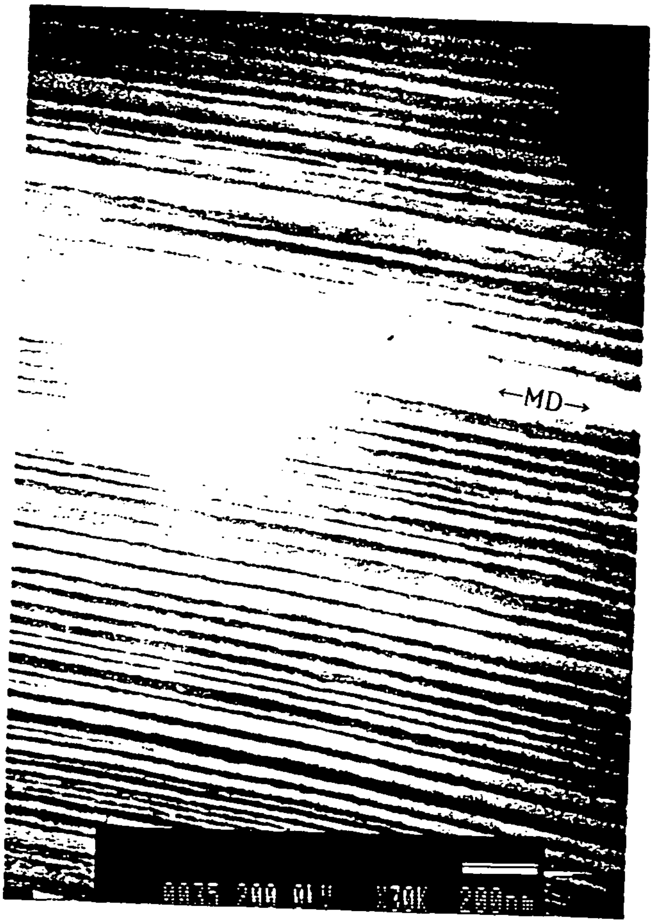

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6422530 A
- JP 2057339 A
- JP 7195617 A
- JP 8066988 A
- JP 51017988 A
- JP 51148755 A
- JP 8001863 A
- JP 8230130 A
- JP 4325545 A
- JP 6080865 A
- JP 7145252 A
- JP 7330924 A
- JP 2081630 A
- JP 7001693 A
- JP 7047650 A
- JP 6234188 A
- JP 7101013 A
- JP 7138387 A
- JP 7207039 A
- JP 3293110 A
- EP 0685332 A